(19) Europäisches Patentamt
European Patent Office
Office européen des brevets

(11) EP 2 514 771 A1

(12) EUROPEAN PATENT APPLICATION
published in accordance with Art. 153(4) EPC

(43) Date of publication:
24.10.2012 Bulletin 2012/43

(21) Application number: 10837541.1

(22) Date of filing: 13.12.2010

(51) Int Cl.:
*C08F 20/60* (2006.01) *C09D 4/00* (2006.01)
*C09D 5/24* (2006.01)

(86) International application number:
PCT/JP2010/072330

(87) International publication number:
WO 2011/074515 (23.06.2011 Gazette 2011/25)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 16.12.2009 JP 2009285283
16.12.2009 JP 2009285276
16.12.2009 JP 2009285288
16.04.2010 JP 2010095512
05.10.2010 JP 2010225876
05.10.2010 JP 2010225891
05.10.2010 JP 2010225886

(71) Applicant: Kao Corporation
Chuo-Ku
Tokyo 103-8210 (JP)

(72) Inventors:
- KITAYAMA,Hiroaki
Wakayama-shi
Wakayama 640-8580 (JP)
- GOTO,Shinya
Wakayama-shi
Wakayama 640-8580 (JP)
- SOWA,Toshiki
Wakayama-shi
Wakayama 640-8580 (JP)

(74) Representative: HOFFMANN EITLE
Patent- und Rechtsanwälte
Arabellastrasse 4
81925 München (DE)

# (54) RESIN MODIFIER

(57) The present invention provides a resin modifier capable of obtaining a coating film having satisfactory basic performances such as antistatic properties, water resistance and transparency, a method for producing a coating film using the resin modifier, and a coating film obtained by the production method. The resin modifier of the present invention is a resin modifier represented by $R^{31}$-O-$(AO)_n$-$SO_3$-, $R^{32}$-$OSO_3^-$, or $R^{33}$-$SO_3^-$ and an ammonium ion that has a polymerizable unsaturated group.

EP 2 514 771 A1

**Description**

Background Art

The present invention relates to a resin modifier, a method for producing a coating film using the resin modifier, and a coating film obtained by the production method.

Background Art

A resin modifier has hitherto been used so as to improve film characteristics and surface characteristics in the fields of painting, printing and the like.

The below-mentioned Patent Documents 1 to 4 describe antistatic agents having a specific structure for the purpose of enhancing an antistatic effect. For example, Patent Document 1 describes an antistatic agent comprising an anion moiety composed of a specific sulfate and a cation moiety composed of a specific amine. Patent Document 2 describes an antistatic agent comprising an anion moiety composed of a nitric acid ion or an alkylsulfonic acid ion whose alkyl group has 1 to 4 carbon atoms, and a cation moiety composed of a specific amine. Patent Document 3 and Patent Document 4 describe resin compositions including a block (b) which contains 10 to 100 mol% of a quaternary ammonium salt structural unit. The block (b) was added for the purpose of obtaining an antistatic effect. The antistatic agent of Patent Document 1 does not have a polymerizable unsaturated group in the cation moiety. In the antistatic agent of Patent Document 2, the anion moiety is not a sulfate. Furthermore, Patent Documents 5 to 6 describe antistatic resin compositions having excellent scratch resistance or the like.

Prior Art Documents

Patent Documents

Patent Document 1: Japanese Unexamined Patent Publication (Kokai) No. 2007-191684
Patent Document 2: Japanese Unexamined Patent Publication (Kokai) No. 2004-123924
Patent Document 3: Japanese Unexamined Patent Publication (Kokai) No. 11-60855
Patent Document 4: Japanese Unexamined Patent Publication (Kokai) No. 11-60856
Patent Document 5: Japanese Unexamined Patent Publication (Kokai) No. 2009-263627
Patent Document 6: Japanese Unexamined Patent Publication (Kokai) No. 2009-287010

Disclosure of the Invention

Problems to be Solved by the Invention

With the spread of liquid crystal displays (LCD) and the like, a coating film with higher basic performances has recently been required. However, the antistatic agents described in Patent Documents 1 to 4 left a room for improvement in that sufficient antistatic effect has not be obtained yet. It has been earnestly desired to improve not only antistatic properties, but also basic performances such as water resistance and transparency of the obtained coating film.

The present invention provides a resin modifier capable of obtaining a coating film having satisfactory basic performances such as antistatic properties, water resistance and transparency, a method for producing a coating film using the resin modifier, and a coating film obtained by the production method.

Means for Solving the Problems

The resin modifier of the present invention is a resin modifier represented by any one of the following formulas (Ia), (Ib) and (Ic):

$$R^{31}\text{-O-(AO)}_n\text{-SO}_3^-B^+ \qquad \text{(Ia)}$$

wherein $R^{31}$ represents a hydrocarbon group having 1 to 22 carbon atoms, AO represents an alkylene oxide group having 2 to 4 carbon atoms, n represents an average addition molar number of AO and is a positive number of 100 or less, and $B^+$ represents an ammonium ion (C) having a polymerizable unsaturated group;

$$R^{32}\text{-}OSO_3^{-}B^{+} \qquad (Ib)$$

wherein $R^{32}$ represents a hydrocarbon group having 6 to 22 carbon atoms, and B+ represents an ammonium ion (C) having a polymerizable unsaturated group; and

$$R^{33}\text{-}SO_3^{-}B^{+} \qquad (Ic)$$

wherein $R^{33}$ represents a hydrocarbon group having 8 to 22 carbon atoms, and B+ represents ammonium ion (c) having a polymerizable unsaturated group.

The coating composition of the present invention is a coating composition including the above resin modifier and an organic solvent.

The method for producing a coating film of the present invention is a method for producing a coating film, which includes coating the above coating composition on a base material, and then irradiating the coating composition with active energy rays to form a coating film on the base material.

The coating film of the present invention is a coating film obtained by the above production method.

The coating film of the present invention is a coating film including structures represented by any one of the following formulas (IVa), (IVb), (IVc), (Va), (Vb) and (Vc) in at least one portion:

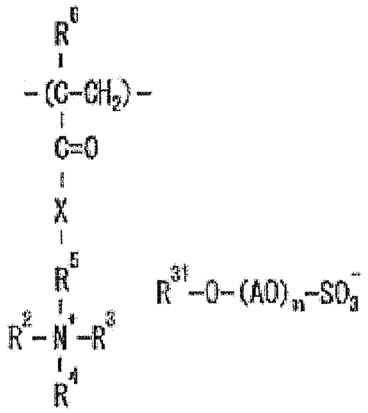

(IVa)

wherein $R^{31}$ represents a hydrocarbon group having 1 to 22 carbon atoms, AO represents an alkylene oxide group having 2 to 4 carbon atoms, n is an average addition molar number of AO and is a positive number of 100 or less, $R^2$, $R^3$ and $R^4$ each independently represents a hydrogen atom or a hydrocarbon group having 1 to 8 carbon atoms, $R^5$ represents an alkylene group having 2 to 5 carbon atoms, $R^6$ represents a hydrogen atom or a methyl group, and X represents O or NH;

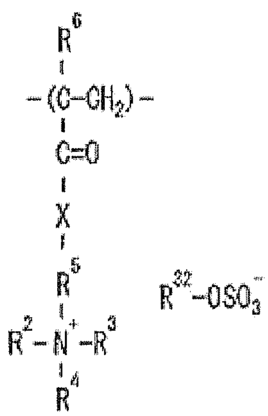

(IVb)

wherein $R^{32}$ represents a hydrocarbon group having 6 to 22 carbon atoms, $R^2$, $R^3$ and $R^4$ each independently represents a hydrogen atom or a hydrocarbon group having 1 to 8 carbon atoms, $R^5$ represents an alkylene group having 2 to 5 carbon atoms, $R^6$ represents a hydrogen atom or a methyl group, and X represents O or NH;

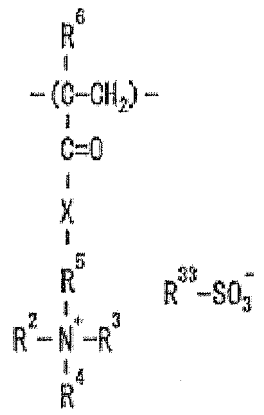

(IVc)

wherein $R^{33}$ represents a hydrocarbon group having 8 to 22 carbon atoms, $R^2$, $R^3$ and $R^4$ each independently represents a hydrogen atom or a hydrocarbon group having 1 to 8 carbon atoms, $R^5$ represents an alkylene group having 2 to 5 carbon atoms, $R^6$ represents a hydrogen atom or a methyl group, and X represents O or NH;

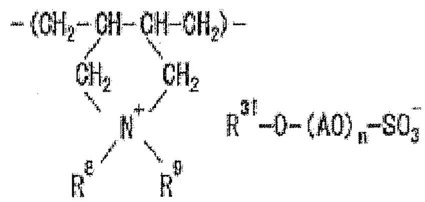

(Va)

wherein $R^{31}$ represents a hydrocarbon group having 1 to 22 carbon atoms, AO represents an alkylene oxide group having 2 to 4 carbon atoms, n represents an average addition molar number of AO and is a positive number of 100 or less, $R^8$ represents a hydrogen atom or a hydrocarbon group having 1 to 8 carbon atoms, and $R^9$ represents a hydrocarbon group having 1 to 8 carbon atoms;

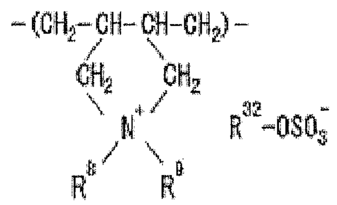

(Vb)

wherein $R^{32}$ represents a hydrocarbon group having 6 to 22 carbon atoms, $R^8$ represents a hydrogen atom or a hydrocarbon group having 1 to 8 carbon atoms, and $R^9$ represents a hydrocarbon group having 1 to 8 carbon atoms; and

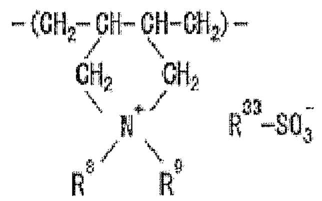

(Vc)

wherein $R^{33}$ represents a hydrocarbon group having 8 to 22 carbon atoms, $R^8$ represents a hydrogen atom or a hydrocarbon group having 1 to 8 carbon atoms, and $R^9$ represents a hydrocarbon group having 1 to 8 carbon atoms.

Effects of the Invention

According to the resin modifier of the present invention, and, a method for producing a coating film using the coating composition containing the resin modifier, a coating film having excellent basic performances such as antistatic properties, water resistance and transparency can be obtained. The coating film of the present invention has excellent basic performances such as antistatic properties, water resistance and transparency.

Mode for Carrying Out the Invention

[Resin Modifier]

The resin modifier of the present invention is a resin modifier represented by the above formula (Ia) (hereinafter also referred to as a "compound (Ia)"). The resin modifier of the present invention is also a resin modifier represented by the above formula (Ib) (hereinafter also referred to as a "compound (Ib)"). The resin modifier of the present invention is also a resin modifier represented by the above formula (Ic) (hereinafter also referred to as a "compound (Ic)").

In the above formula (Ia), from the viewpoint of solubility in organic solvent and industrial availability, $R^{31}$ is a hydrocarbon group having 1 to 22 carbon atoms, preferably a hydrocarbon group having 1 to 20 carbon atoms, more preferably a hydrocarbon group having 8 to 20 carbon atoms, still more preferably a hydrocarbon group having 10 to 18 carbon atoms, and yet more preferably a hydrocarbon group having 12 to 18 carbon atoms. From the viewpoint of antistatic properties, AO is an alkylene oxide group having 2 to 4 carbon atoms, and $(AO)_n$ represents addition of ethylene oxide, propylene oxide and butylene oxide alone, and random, block, random/block addition and the like of two or more kinds of alkylene oxide group, and preferably contains ethylene oxide from the viewpoint of antistatic properties and wettability. From the viewpoint of antistatic properties of the compound (Ia), "n" represents an average addition molar number and is a positive number of 100 or less, and "n" is preferably a numeral of 1 to 80, more preferably a numeral of 1 to 70, still more preferably a numeral of 1 to 50, and yet still more preferably a numeral of 1 to 30.

In the above formula (Ib), from the viewpoint of solubility in organic solvent, industrial availability and non-petroleum based material, $R^{32}$ is a hydrocarbon group having 6 to 22 carbon atoms, preferably a hydrocarbon group having 8 to 22 carbon atoms, more preferably a hydrocarbon group having 8 to 20 carbon atoms, still more preferably a hydrocarbon group having 8 to 18 carbon atoms, and yet still more preferably a hydrocarbon group having 12 to 18 carbon atoms.

In the above formula (Ic), from the viewpoint of solubility in organic solvent and industrial availability, $R^{33}$ is a hydrocarbon group having 8 to 22 carbon atoms, preferably a hydrocarbon group having 8 to 20 carbon atoms, more preferably a hydrocarbon group having 8 to 18 carbon atoms, and still more preferably a hydrocarbon group having 8 to 16 carbon atoms.

In the above formulas (Ia), (Ib) and (Ic), the ammonium ion (C) has a polymerizable unsaturated group from the viewpoint of water resistance and transparency. Examples of the polymerizable unsaturated group include a (meth) acryl ester group, a (meth)acrylamide group, an $\alpha,\beta$-unsaturated carbonyl ester or amide group such as a maleic acid ester or maleimide group, an $\alpha,\beta$-unsaturated nitrile group, an allyl group, a styryl group, a vinyl group, an isopropenyl group and the like. From the viewpoint of antistatic properties, and wettability of a coating film containing a resin modifier of the present invention, an allyl group or an $\alpha,\beta$-unsaturated carbonyl group is preferable. Enhancement of the wettability enables suppression of diffused reflection of the coating film and also improvement of anti-fogging effect.

From the viewpoint of antistatic properties, it is preferred that the above ammonium ion (C) is contained in a compound represented by the following formula (II):

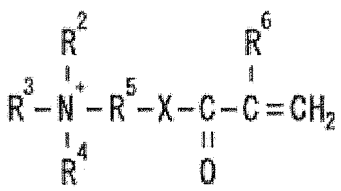

(II)

wherein $R^2$, $R^3$ and $R^4$ each independently represents a hydrogen atom or a hydrocarbon group having 1 to 8 carbon atoms, and is preferably a hydrocarbon group having 1 to 8 carbon atoms from the viewpoint of antistatic properties and industrial availability, and more preferably a hydrocarbon group having 1 or 2 carbon atom. $R^5$ represents an alkylene group having 2 to 5 carbon atoms, and is preferably an alkylene group having 2 to 3 carbon atoms from the viewpoint

of antistatic properties and industrial availability. $R^6$ represents a hydrogen atom or a methyl group, and X represents O or NH and is preferably NH from the viewpoint of antistatic properties. From the viewpoint of antistatic properties and industrial availability, the total number of carbon atoms of $R^2$, $R^3$ and $R^4$ is preferably from 2 to 12, more preferably from 3 to 9, and still more preferably from 3 to 6.

From the viewpoint of antistatic properties and wettability, it is also preferred that the above ammonium ion (C) is contained in a compound represented by the following formula (III):

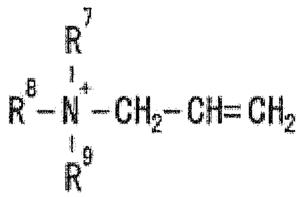

(III)

wherein $R^7$ and $R^8$ each independently represents a hydrogen atom or a hydrocarbon group having 1 to 8 carbon atoms, and is preferably a hydrocarbon group having 1 to 8 carbon atoms from the viewpoint of antistatic properties and industrial availability, more preferably a hydrocarbon group having 1 to 6 carbon atoms, and still more preferably a hydrocarbon group having 1 to 3 carbon atoms. $R^7$ is also preferably an allyl group, and $R^8$ is also preferably a hydrogen atom or a hydrocarbon group having 1 to 8 carbon atoms, more preferably a hydrocarbon group having 1 to 6 carbon atoms, and still more preferably a hydrocarbon group having 1 to 3 carbon atoms. Specific examples thereof include a methyl group, an ethyl group, a propyl group (an n-propyl group, an iso-propyl group), a butyl group (an n-butyl group, an iso-butyl group, a tert-butyl group), an allyl group, a pentyl group, a hexyl group, an octyl group, a 2-ethylhexyl group and the like. $R^9$ represents a hydrocarbon group having 1 to 8 carbon atoms. From the viewpoint of antistatic properties and industrial availability, it is preferably a hydrocarbon group having 1 to 6 carbon atoms, and more preferably a hydrocarbon group having 1 to 2 carbon atoms. Specific examples thereof include a methyl group, an ethyl group, a propyl group (an n-propyl group, an iso-propyl group), a butyl group (an n-butyl group, an iso-butyl group, a tert-butyl group), a pentyl group, a hexyl group, an octyl group, a 2-ethylhexyl group and the like.

From the viewpoint of antistatic properties and industrial availability, the total number of carbon atoms of $R^7$, $R^8$ and $R^9$ is preferably from 2 to 15, more preferably from 2 to 12, and still more preferably from 2 to 9.

It is preferred that the compounds (Ia), (Ib) and (Ic) have active energy line curability. The active energy line curability means a property in which curing occurs when irradiated with active energy rays such as ultraviolet rays, electron beams, radiations and X-rays, or using an initiator in combination.

Examples of the group capable of curing (reacting) by active energy rays include an $\alpha,\beta$-unsaturated carbonyl group, an allyl group, an $\alpha,\beta$-unsaturated nitrile group, a styryl group, a vinyl group and an isopropenyl group. From the viewpoint of practical use, active energy rays are preferably ultraviolet rays.

The compounds (Ia), (Ib) and (Ic) are preferably resin modifiers having antistatic properties, namely antistatic agents. Examples of the antistatic agent include antistatic agents which enable a surface resistivity value of a coating film produced by using the antistatic agent to fall within a range of $5 \times 10^{12}\ \Omega$ or less.

In the present invention, the compounds (Ia), (Ib) and (Ic) may be used alone as the resin modifier, or may be used in combination with the other resin modifier with antistatic properties, which has antistatic properties, water resistance, transparency and the like. From the viewpoint of water resistance and transparency, the amount of the compound (Ia), (Ib) or (Ic) is preferably 50 parts by weight or more, more preferably 70 parts by weight or more, and still more preferably 90 parts by weight or more, based on 100 parts by weight of the total of the resin modifiers.

[Method for Production of Compounds (Ia), (Ib) and (Ic)]

The compound (Ia) can be obtained by a method in which a salt of $R^{31}$-O-$(AO)_n$-$SO_3^-$ with an alkali metal and a salt of ammonium having a polymerizable unsaturated group with halogen are subjected to salt exchange, or a method in which $R^{31}$-O-$(AO)_n$-$SO_3H$ is neutralized with an amine having a polymerizable unsaturated group or an ammonium hydroxide having a polymerizable unsaturated group.

The compound (Ib) can be obtained by a method in which a salt of $R^{32}$-$OSO_3^-$ with an alkali metal and a salt of ammonium having a polymerizable unsaturated group with halogen are subjected to salt exchange, or a method in which $R^{32}$-$OSO_3H$ is neutralized with an amine having a polymerizable unsaturated group or an ammonium hydroxide having a polymerizable unsaturated group.

The compound (Ic) can be obtained by a method in which a salt of $R^{33}$-$SO_3^-$ with an alkali metal and a salt of ammonium having a polymerizable unsaturated group with halogen are subjected to salt exchange, or a method in which $R^{33}$-$SO_3H$ is neutralized with an amine having a polymerizable unsaturated group or an ammonium hydroxide having

a polymerizable unsaturated group.

In case of producing the compounds (Ia), (Ib) or (Ic), when raw materials containing water are used, water is used in the synthesis or water is contained in the product, a solution of a resin modifier containing the compounds (Ia), (Ib) or (Ic) can be obtained by dissolving in an organic solvent after dehydration, or dehydrating after addition to an organic solvent. When all substituents of an ammonium group of the above ammonium ion (C) are not hydrogens, it is preferred to obtain by the above-mentioned method of performing salt exchange from the viewpoint of industrial availability, handling properties or the like. When at least one of substituents of an ammonium group of the above ammonium ion (C) is hydrogen, it is preferred to obtain a method of neutralization with the above-mentioned amine from the viewpoint of simplification of the step, for example, the dehydration step can be omitted.

Examples of $R^{31}$ in the salt of $R^{31}$-O-$(AO)_n$-$SO_3^-$ with an alkali metal include a methyl group, an ethyl group, a propyl group, a butyl group, a pentyl group, a hexyl group, an octyl group, a nonyl group, a decyl group, an undecyl group, a lauryl group, a myristyl group, a cetyl group, a stearyl group, an oleyl group, a behenyl group, a nonylphenyl group and the like. Examples of $(AO)_n$ include a polyoxyethylene group, a polyoxypropylene group, a polyoxybutene group, a polyoxyethylenepolyoxypropylene group and the like. Examples of the alkali metal include lithium, sodium and potassium. Specific examples thereof include lithium, sodium and potassium salts of polyoxyethylene methyl ether sulfate; lithium, sodium and potassium salts of polyoxyethylene lauryl ether sulfate; and lithium, sodium and potassium salts of polyoxyethyleneoleyl ether sulfate.

Examples of $R^{32}$ in the salt of $R^{32}$-$OSO_3^-$ with an alkali metal include a hexyl group, an octyl group, a nonyl group, a decyl group, an undecyl group, a lauryl group, a myristyl group, a cetyl group, a stearyl group, an oleyl group, a behenyl group and the like. Examples of the alkali metal include lithium, sodium and potassium. Specific examples thereof include lithium, sodium and potassium salts of lauryl sulfate; lithium, sodium and potassium salts of myristyl sulfate; lithium, sodium and potassium salts of decyl sulfate; and lithium, sodium and potassium salts of 2-hexyl-decyl sulfate.

Examples of $R^{33}$ in the salt of $R^{33}$-$SO_3^-$ with an alkali metal include an octyl group, a nonyl group, a decyl group, an undecyl group, a lauryl group, a myristyl group, a cetyl group, a stearyl group, an oleyl group, a behenyl group, a dodecylphenyl group and the like. Examples of the alkali metal include lithium, sodium and potassium. Specific examples include lithium, sodium and potassium salts of decanesulfonate; and lithium, sodium and potassium salts of pentadecanesulfonate.

The salt of ammonium having a polymerizable unsaturated group with halogen is preferably a salt of those corresponding to the chemical formulas (II) and (III) with a halogen, and preferably a chloride from the viewpoint of industrial availability. Examples of the chemical formula (II) include those in which all of $R^2$, $R^3$ and $R^4$ are methyl groups, those in which two substituents are methyl groups and one substituent is an ethyl group, those in which two substituents are methyl groups and one substituent is a benzyl group and those in which two substituents are ethyl groups and one substituent is a methyl group. Examples of the moiety in which $R^2$, $R^3$, $R^4$ and $N^+$ of the chemical formula (II) have been removed include a 2-(meth)acryloxyethyl group, a 3-(meth)acryloxypropyl group, a 4-(meth)acryloxybutyl group, a 5-(meth)acryloxypentyl group, a 6-(meth)acryloxyhexyl group, a 8-(meth)acryloxyoctyl group, a 4-(meth)acrylamidebutyl group, a 5-(meth)acrylamidepentyl group, a 6-(meth)acrylamidehexyl group, a 8-(meth)acrylamideoctyl group, a 2-(meth) acrylamideethyl group and a 3-(meth)acrylamidepropyl group. Specific examples of the salt of those corresponding to the chemical formula (II) with a halogen include (3-(meth)acrylamidepropyl)trimethylammonium chloride and the like. Examples of those corresponding to the chemical formula (III) include those in which all of $R^7$, $R^8$ and $R^9$ are methyl groups, those in which all of $R^7$, $R^8$ and $R^9$ are ethyl groups, those in which all of $R^7$, $R^8$ and $R^9$ are propyl groups, those in which two substituents are methyl groups and one substituent is an ethyl group, those in which two substituents are methyl groups and one substituent is a propyl group, those in which two substituents are methyl groups and one substituent is a butyl group, those in which two substituents are methyl groups and one substituent is a pentyl group, a hexyl group, an octyl group or a benzyl group, those in which one substituent is an allyl group and two substituents are methyl groups, those in which one substituent is an allyl group and two substituents are ethyl groups, those in which one substituent is an allyl group and two substituents are propyl groups, and those in which one substituent is an allyl group, one substituent is a methyl group and one substituent is an ethyl group, a propyl group, a butyl group, a hexyl group or an octyl group. Specific examples of the salt of those corresponding to the chemical formula (III) with a halogen include allyltrimethylammonium chloride, diallyldimethylammonium chloride and the like. Commercially available products can be used as these salts.

$R^{31}$-O-$(AO)_n$-$SO_3H$ as a precursor of an alkali metal salt can be obtained, for example, by a method in which a compound represented by $R^{31}$-O-$(AO)^n$-H is sulfonated by reacting with chlorosulfonic acid or sulfuric anhydride ($SO_3$ gas). $R^{31}$, AO and n in $R^{31}$-O-$(AO)_n$-H are the same as $R^{31}$ AO and n in the above compound (Ia). Specific examples of $R^{31}$-O-$(AO)_n$-$SO_3H$ used in neutralization of $R^{31}$-O-$(AO)_n$-$SO_3H$ with an amine having a polymerizable unsaturated group include those in which an alkali metal ion moiety of the above-mentioned specific examples of the salt of $R^{31}$-O-$(AO)_n$-$SO_3^-$ with an alkali metal is substituted with a hydrogen ion.

$R^{32}$-$OSO_3H$ as a precursor of an alkali metal salt can be obtained, for example, by a method in which a compound

represented by $R^{32}$-OH is sulfated by reacting with chlorosulfonic acid or sulfuric anhydride ($SO_3$ gas). $R^{32}$ in $R^{32}$-OH is the same as $R^{32}$ in the above compound (Ib).

Specific examples of $R^{32}$-$OSO_3H$ used in neutralization of $R^{32}$-$OSO_3H$ with an amine having a polymerizable unsaturated group include those in which an alkali metal ion moiety of specific examples of the salt of $R^{32}$-$OSO_3^-$ with n alkali metal is substituted with a hydrogen ion.

$R^{33}$-$SO_3H$ as a precursor of an alkali metal salt can be obtained, for example, by a reaction of an olefin with $SO_3$, and examples of the method of directly obtaining a salt include a method of a reaction of an alkyl halide with a sulfite, typified by a Strecker reaction; and a method in which paraffin is reacted with a mixed gas of $SO_2$ and $Cl_2$ under ultraviolet irradiation to form a sulfochloride and then the sulfochloride is hydrolyzed in the presence of an alkali, typified by a Reed reaction.

Specific examples of $R^{33}$-$SO_3H$ used in neutralization of $R^{33}$-$SO_3H$ with an amine having a polymerizable unsaturated group include those in which an alkali metal ion moiety of specific examples of the salt of $R^{33}$-$SO_3^-$ with an alkali metal is substituted with a hydrogen ion.

Specific examples of the amine having a polymerizable unsaturated group include an amine in which one of hydrocarbon groups having no polymerizability and a halogen have been removed from the above-mentioned specific examples of the salt of an ammonium having a polymerizable unsaturated group with a halogen. Specific examples thereof include allyldimethylamine in which a methyl group as the hydrocarbon group having no polymerizability, and a chloride as the halogen have been removed from allyltrimethylammonium chloride and the like.

Examples of the compound (Ia) include compounds composed of the above-mentioned $R^{31}$-O-$(AO)_n$-$SO_3^-$ and the above-mentioned ammonium having a polymerizable unsaturated group, and specific examples thereof include (meth)acrylamide propyl trimethyl ammonium poly(1-50)oxyethylene methyl ether sulfate, (meth)acrylamide propyl trimethyl ammonium poly(1-50)oxyethylene lauryl ether sulfate, (meth)acrylamide propyl trimethyl ammonium poly(1-50) oxyethylene oleyl ether sulfate, diallyldimethyl ammonium poly(1-50)oxyethylene lauryl ether sulfate, allyldimethyl ammonium poly(1-50)oxyethylene lauryl ether sulfate, maleimidepropylene trimethyl ammonium poly(1-50)oxyethylene lauryl ether sulfate, 2-vinylpyridinium poly(1-50)oxyethylene lauryl ether sulfate, 1-vinylimidazolium poly(1-50)oxyethylene lauryl ether sulfate, styrylmethylene trimethyl ammonium poly(1-50)oxyethylene lauryl ether sulfate and the like. In the present invention, "poly(1-50)oxyethylene" means that an average addition molar number n of an ethylene oxide group is from 1 to 50.

Examples of the compound (Ib) include compounds composed of the above-mentioned $R^{32}$-$OSO_3^-$ and the above-mentioned ammonium having a polymerizable unsaturated group, and specific examples thereof include (meth) acrylamide propyl trimethyl ammonium lauryl sulfate, (meth)acrylamide propyl trimethyl ammonium decyl sulfate, diallyldimethyl ammonium lauryl sulfate, allyldimethyl ammonium lauryl sulfate, maleimidepropylene trimethyl ammonium lauryl sulfate, 2-vinylpyridinium lauryl sulfate, 1-vinylimidazolium lauryl sulfate, styrylmethylene trimethyl ammonium lauryl sulfate and the like.

Examples of the compound (Ic) include compounds composed of the above-mentioned $R^{33}$-$SO_3^-$ and the above-mentioned ammonium having a polymerizable unsaturated group, and specific examples thereof include (meth)acrylamide propyl trimethyl ammonium decane sulfonate, (meth)acrylamide propyl trimethyl ammonium pentadecane sulfonate, diallyl dimethyl ammonium decane sulfonate and the like.

There is no particular limitation on the organic solvent used in the production of the compounds (Ia), (Ib) and (Ic). From the viewpoint of solubility of the compounds (Ia), (Ib) and (Ic), an organic solvent having a solubility parameter (SP value described in POLYMER HANDBOOK THIRD EDITION 1989 by John Wiley and Sons, Inc.) of 15.0 to 30.0 $(MPa)^{1/2}$ is preferable, and organic solvent having solubility parameter of 20.0 to 30.0$(MPa)^{1/2}$ is more preferable. The solubility parameter is shown in parenthesis. Examples of the organic solvent include aliphatic hydrocarbons such as hexane; alcohols such as methanol, ethanol (26.0), isopropyl alcohol (23.5), methoxyethanol, ethoxyethanol, methoxycarbitol and benzyl alcohol (24.8); ketones such as acetone (20.3), methyl ethyl ketone (19.0) and methyl isobutyl ketone (17.2); halogen solvents such as methylene chloride and chloroform; ethers such as diethylether; aromatics such as toluene (18.3) and xylene; esters such as n-butyl acetate (17.4) and n-ethyl acetate (18.6); methylpyrrolidone and dimethyl sulfoxide; and the like. From the viewpoint of solubility, polar solvents such as alcohols, ketones and esters are preferable. In case the other component of the below-mentioned coating composition, for example, a resin monomer is liquid and is also mutually dissolved with the compounds (Ia), (Ib) and (Ic), the resin monomer may be used as the organic solvent.

[Coating Composition]

The coating composition of the present invention preferably contains a resin modifier represented by any one of the above-mentioned formulas (Ia), (Ib) and (Ic), and an organic solvent. The resin modifier is preferably used in a state of being dissolved in the organic solvent. Examples of the organic solvent used in the coating composition preferably include the same as the above-mentioned organic solvents used in the production of the compounds (Ia), (Ib) and (Ic).

Suitable range of the solubility parameter (SP value described in POLYMER HANDBOOK THIRD EDITION 1989 by John Wiley and Sons, Inc.) is also the same as that described above, and the organic solvent is preferably an organic solvent having a solubility parameter within a range from 15.0 to 30.0 $(MPa)^{1/2}$, and more preferably from 20.0 to 30.0 $(MPa)^{1/2}$. From the viewpoint of solubility of the resin modifier, polar solvents are preferable. Among these solvents, the above-mentioned alcohols, ketones and esters are preferable. On the other hand, in case the resin monomer used in the coating composition is liquid, when the resin monomer dissolves other components containing the resin modifier of the present invention, the resin monomer may be used as the organic solvent from the viewpoint of improvement in handling properties and simplification of the step.

In the coating composition of the present invention, the content of the resin modifier is preferably from 0.5 to 50% by weight, more preferably from 0.5 to 30% by weight, still more preferably from 1 to 25% by weight, and yet still more preferably from 2 to 20% by weight, from the viewpoint of antistatic properties, water resistance and the like.

It is preferred that the coating composition of the present invention further contains a resin or a resin monomer. There is no particular limitation on the resin or resin monomer to be used as long as it is a resin or resin monomer which is suited for use in coating to a base material in the form of a solution prepared using an organic solvent. For example, the resin or resin monomer may be an active energy line-curabile resin or resin monomer, or a thermosetting resin or resin monomer. From the viewpoint of hardness of the coating film and costs, it is preferred to use a resin or resin monomer capable of reacting by irradiation with active energy rays.

The resin or resin monomer capable of reacting by irradiation with active energy rays beams means a resin or resin monomer having a functional group capable of directly causing a curing reaction by irradiation with active energy ray such as ultraviolet ray and electron, or indirectly causing a curing reaction by an action of an initiator.

From the viewpoint of maintaining transparency, the active energy line-curable resin or resin monomer is preferably an acrylic resin or a monomer thereof. From the viewpoint of improving hardness of the coating film, the resin or resin monomer is preferably a resin or resin monomer which has two or more polymerizable functional groups. Examples of the resin or resin monomer, which satisfies both features, include ethylene glycol (meth)acrylate, polyethylene glycol (meth)acrylate, di(meth)acrylates such as pentaerythritol di(meth)acrylate and pentaerythritol di(meth)acrylate monoalkyl ester; tri(meth)acrylates such as trimethylolpropane tri(meth)acrylate and pentaerythritol tri(meth)acrylate; polyfunctional (meth)acrylates such as pentaerythritol tetra(meth)acrylate, dipentaerythritol penta(meth)acrylate, penta(meth)acrylate of dipentaerythrithol EO adduct, and resins formed by polymerization of these monomers.

The content of the resin or resin monomer capable of reacting by irradiation with active energy rays in the coating composition of the present invention is preferably from 20 to 80% by weight, more preferably from 25 to 80% by weight, and still more preferably from 30 to 75% by weight, from the viewpoint of handling properties and costs. Particularly, when using the resin capable of reacting by irradiation with active energy rays and also using an organic solvent in the coating composition (that is, when the resin capable of reacting by irradiation with active energy rays is not used as the organic solvent), the content is preferably within the above range.

In the coating composition of the present invention, the amount of the resin modifier is preferably from 1 to 50 parts by weight, and more preferably from 2 to 30 parts by weight, based on 100 parts by weight of the resin or resin monomer capable of reacting by irradiation with active energy rays. In that case, the content of the resin modifier in the obtained coating film is preferably from 1 to 50 parts by weight, and more preferably from 2 to 30 parts by weight, based on 100 parts by weight the resin or resin monomer capable of reacting by irradiation with active energy rays.

When the resin or resin monomer is not used in the coating composition of the present invention, the content of the resin modifier in the coating composition is preferably from 50% by weight to 100% by weight in the solid component of the coating composition from the viewpoint of antistatic properties and wettability.

The content of the organic solvent is preferably from 10 to 70% by weight, and more preferably from 20 to 60% by weight, and still more preferably from 20 to 55% by weight, in the coating composition of the present invention from the viewpoint of handling properties such as coating. The amount of the organic solvent in the coating composition also includes the amount of an organic solvent to be introduced from a resin modifier solution.

The coating composition of the present invention preferably contains an ionic liquid from the viewpoint of an improvement in antistatic properties under low humidity, in addition to water resistance and transparency.

Herein, the ionic liquid is preferably a compound represented by the following general formula (VI). $X^+$ and $Y^-$ each does not have a polymerizable unsaturated group, namely a group capable of curing by the above-mentioned active energy rays:

$$X^{+} \quad Y^{-} \quad \cdots (VI)$$

wherein $X^+$ represents a cation, and $Y^-$ represents an anion.

The molecular weight of the ionic liquid is preferably from 150 to 1,000, and more preferably from 180 to 800, from the viewpoint of antistatic properties under low humidity.

From the viewpoint of antistatic properties under low humidity, the melting point is preferably 100°C or lower, more preferably 50°C or lower, and still more preferably 30°C or lower. In the present invention, the melting point means a melting point measured by "Method for Measurement of Melting Point and Melting Range of Chemical Product" defined in JIS K0064, or a freezing point measured by "Method for Measurement of Freezing Point of Chemical Product" defined in JIS K0065. The melting point was measured in case of a compound which is solid at room temperature (20°C), while the freezing point was measured in case of a compound which is liquid at room temperature (20°C), and the obtained value was regarded as the melting point.

From the viewpoint of antistatic properties under low humidity, a cation represented by the above-mentioned $X^+$ is more preferably one or more kinds selected from the group consisting of the following formulas (a) to (d):

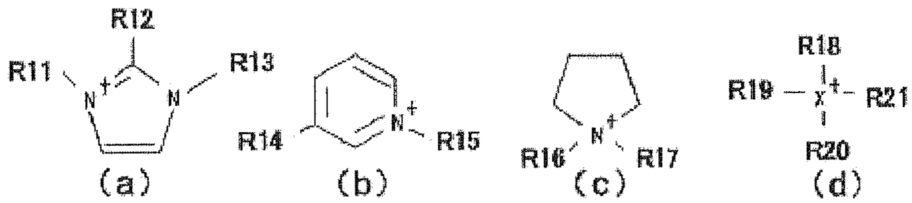

wherein R11 in the formula (a) represents a hydrocarbon group having 1 to 20 carbon atoms, R12 represents a hydrogen atom or a hydrocarbon group having 1 to 20 carbon atoms or a hydroxyl group, R13 represents a hydrocarbon group having 1 to 20 carbon atoms, or a functional group in which one hydrogen of a hydrocarbon group is substituted on a hydroxyl group;

wherein R14 in the formula (b) represents a hydrogen atom or a hydrocarbon group having 1 to 20 carbon atoms or a hydroxyl group, and R15 represents a hydrocarbon group having 1 to 20 carbon atoms, or a functional group in which one hydrogen of a hydrocarbon group is substituted on a hydroxyl group;

wherein R16 and R17 in the formula (c) each independently represents a hydrocarbon group having 1 to 20 carbon atoms, or a functional group in which one hydrogen of a hydrocarbon group is substituted on a hydroxyl group.

Hydrocarbon groups represented by R11 to R17 each independently preferably has 1 to 8 carbon atoms, more preferably 1 to 5 carbon atoms, still yet more preferably 1 to 3 carbon atoms. wherein X in the formula (d) represents a nitrogen atom, a sulfur atom or a phosphorus atom, R18 represents a hydrogen atom, a hydrocarbon group having 1 to 20 carbon atoms, or a functional group in which one hydrogen of a hydrocarbon group is substituted on a hydroxyl group, R19, R20 and R21 each independently represents a hydrocarbon group having 1 to 20 carbon atoms, or a functional group in which one hydrogen of a hydrocarbon group is substituted on a hydroxyl group, provided that when X is a sulfur atom, R21 is absent.

A hydrocarbon group represented by R18 preferably has 6 to 18 carbon atoms, and more preferably 8 to 18 carbon atoms, and hydrocarbon groups represented by R19 to R21 each independently preferably has 1 to 12 carbon atoms, more preferably 2 to 8 carbon atoms.

From the viewpoint of antistatic properties under low humidity, examples of the anion represented by the above-mentioned $Y^-$ include ions of organic acids such as aliphatic (C1-C20) carboxylic acid, fluoroaliphatic (C1-C20) carboxylic acid, poly (average addition molar number: 1-50) oxyalkylene alkyl (C1-C20) ether carboxylic acid, alkyl (C1-C20) sulfuric acid ester, polyoxyalkylene alkyl (C1-C20) sulfuric acid ester, alkane (C1-C20) sulfonic acid, fluoroalkane (C1-C20) sulfonic acid, alkyl (C1-C20) benzenesulfonic acid, alkyl (C1-C20) phosphoric acid ester, poly (average addition molar number: 1-50) oxyalkylene alkyl (C1-C20) phosphoric acid ester, bis(perfluoroalkyl (C1-5) sulfonyl)imide, tris(perfluoroalkyl (C1-C5) sulfonyl)methane and tris(perfluoroalkyl (C1-C5))trifluorophosphate; and ions of inorganic acids such as tetrafluoroboric acid, perchloric acid, hexafluorophosphoric acid, hexafluoroantimonic acid and hexafluoroarsenic acid, phosphoric acid, sulfuric acid, boric acid, halogen, dicyanoamide, tricyanomethide, tetracyanoborate, thiocyanic acid, and dioxalated boric acid.

Specifically, one or more kinds of ionic compounds selected from the group consisting of $[CF_3COO^-]$ , $[CH_3SO_4^-]$, $[C_2H_5SO_4^-]$, $[C_4H_9SO_4^-]$, $[C_6H_{13}SO_4^-]$, $[C_8H_{17}SO_4^-]$, $[CH_3O(C_2H_4O)_nSO_3^-]$ (n represents an average addition molar number and is from 1 to 5), $[CH_3SO_3^-]$, $[C_2H_5SO_3^-]$, $[CF_3SO_3^-]$, $[C_4F_9SO_3^-]$, $[CH_3C_6H_4SO_3^-]$, $[N(SO_2CF_3)_2^-]$, $[(C_2F_5)_3PF_3\text{-}]$, $[BF_4^-]$, $[PF_6^-]$, $[HSO_4^-]$, $[Cl^-]$, $[Br^-]$, $[I^-]$, $[N(CN)_2^-]$, $[C(CN)_3^-]$, $[B(CN)_4^-]$, $[SCN^-]$ and $[B(C_2O_4)_2^-]$ are preferable from the viewpoint of antistatic properties under low humidity.

Examples of preferable ionic liquid represented by the above-mentioned formula (VI) include the followings. Examples of the imidazolium compound (compound in which a cation represented by the above-mentioned $X^+$ is represented by the formula (a)) include 1-ethyl-3-methylimidazolium tri(pentafluoroethyl)trifluorophosphate (melting point (hereinafter also referred to as "mp"): - 1°C), 1-butyl-3-methylimidazolium dicyanoamide (mp: < - 20°C), 1-butyl-2,3-dimethylimidazolium tetrafluoroborate (mp: 40°C), 1-butyl-2,3-dimethylimidazolium chloride (mp: 99°C), 1-butyl-3-methylimidazolium trifluoromethane sulfonate (mp: 17°C), 1-hexyl-3-methylimidazolium bis(trifluoromethylsulfonyl)imide (mp: -9°C), 1-butyl-2,3-dimethylimidazolium hexafluorophosphate (mp: 42°C), 1-ethyl-3-methylimidazolium tetrafluoroborate (mp: 14°C), 1-ethyl-3-methylimidazolium bromide (mp: 65°C), 1-hexyl-3-methylimidazolium chloride (mp: < -20°C), 1-butyl-3-methylimidazolium tetrafluoroborate (mp: < -20°C), 1-butyl-3-methylimidazolium hexafluorophosphate (mp: 12°C), 1-ethyl-3-methylimidazolium chloride (mp: 88°C), 1-methyl-3-octylimidazolium chloride (mp: < -20°C), 1,3-dimethylimidazolium methyl sulfate (mp: 45°C), 1-ethyl-3-methylimidazolium trifluoromethane sulfonate (mp: -12°C), 1-butyl-3-methylimidazolium methyl sulfate (mp: 13°C), 1-hexyl-3-methylimidazolium tetrafluoroborate (mp: < -20°C), 1-hexyl-3-methylimidazolium hexafluorophosphate (mp: < - 20°C), 1-hexyl-3-methylimidazolium tri(pentafluoroethyl)trifluorophosphate (mp: -14°C), 1-butyl-3-methylimidazolium chloride (mp: 73°C), 1-butyl-3-methylimidazolium bromide (mp: 76°C), 1-butyl-3-methylimidazolium bis(trifluoromethylsulfonyl)imide (mp: 2°C), 1-butyl-2,3-dimethylimidazolium trifluoromethane sulfonate (mp: 41°C), 1-ethyl-3-methylimidazolium trifluoroacetate (mp: < -20°C), 1-butyl-3-methylimidazolium trifluoroacetate (mp: < -20°C), 1-ethyl-3-methylimidazolium dicyanamide (mp: < -20°C), 1-ethyl-3-methylimidazolium methyl sulfate (mp: < -20°C), 1-ethyl-3-methylimidazolium paratoluenesulfonate (mp: 56°C), 1-butyl-3-methylimidazolium octyl sulfate (mp: 32°C), 1-butyl-3-methylimidazolium iodide (mp: < -20°C), 1-ethyl-3-methylimidazolium bis(trifluoromethylsulfonyl)imide (mp: - 15°C), 1-butyl-2,3-dimethylimidazolium iodide (mp: 97°C), 1-ethyl-3-methylimidazolium thiocyanate (mp: -20°C), 1-methyl-3-propylimidazolium iodide (mp: < -20°C), 1-ethyl-3-methylimidazolium octyl sulfate (mp: 11°C), 1-butyl-3-methylimidazolium hydrogen sulfate (mp: 38°C), 1-ethyl-3-methylimidazolium tetracyanoborate (mp: 13°C), 1-butyl-3-methylimidazolium tri(pentafluoroethyl)trifluorophosphate (mp: 3°C), 1-decyl-3-methylimidazolium tetracyanoborate (mp: 18°C), 1-cyanomethyl-3-methylimidazolium bis(trifluoromethylsulfonyl)imide (mp: < -20°C), 1-(2-hydroxyethyl)-3-methylimidazolium bis(trifluoromethylsulfonyl)imide (mp: < -20°C), 1-ethyl-3-methylimidazolium methanesulfonate (mp: 35°C), 1-butyl-3-methylimidazolium methane sulfonate (mp: 75°C), 1-ethyl-3-methylimidazolium 2(2-methoxyethoxy)ethylsulfate (mp: 15°C), 1-ethyl-3-methylimidazolium normal butyl sulfate (mp: 24°C), 1-ethyl-3-methylimidazolium normal hexyl sulfate (mp: 7°C), 1-butyl-3-methylimidazolium tricyanomethide (mp: < -20°C), 1-(2-hydroxyethyl)-3-methylimidazolium tri(pentafluoroethyl)trifluorophosphate (mp: < -20°C), 1-ethyl-3-methylimidazolium iodide (mp: 69°C), 1-ethyl-3-hydroxyethylimidazolium bromide (mp: < - 20°C), 1-ethyl-3-hydroxypropylimidazolium bromide (mp: < - 20°C) and the like.

Examples of the pyridium compound (compound in which a cation represented by the above-mentioned $X^+$ is represented by the formula (b)) include N-butyl-3-methylpyridium tetrafluoroborate (mp: < -20°C), N-butyl-3-methylpyridium hexafluorophosphate (mp: 46°C), N-hexyl-4-dimethylamino-pyridium bis(trimethylsulfonyl)imide (mp: < -20°C), N-(3-hydroxypropyl)pyridium bis(trimethylsulfonyl)imide (mp: < - 20°C), N-ethyl-3-hydroxymethylpyridium ethyl sulfate (mp: < -20°C), N-ethyl-3-methylpyridium ethyl sulfate (mp: < - 20°C), N-butyl-3-methylpyridium dicyanamide (mp: 16°C), N-(3-hydroxypropyl)pyridium tri(pentafluoroethyl)trifluorophosphate (mp: < -20°C) and the like.

Examples of the pyrrolidinium compound (compound in which a cation represented by the above-mentioned $X^+$ is represented by the formula (c)) include N-butyl-1-methylpyrrolidinium dicyanoamide (mp: < -20°C), N-butyl-1-methylpyrrolidinium bis(trifluoromethylsulfonyl)imide (mp: -6°C), N-butyl-1-methylpyrrolidinium tri(pentafluoroethyl)trifluorophosphate (mp: 4°C), N-butyl-1-methylpyrrolidinium tetracyanoborate (mp: 22°C), N-(methoxyethyl)-1-methylpyrrolidinium bis(trimethylsulfonyl)imide (mp: < -20°C), N-butyl-1-methylpyrrolidinium bis(oxalate(2-)-O,O')borate (mp: 55°C), N-(2-methoxyethyl)-1-methylpyrrolidinium tri(pentafluoroethyl)trifluorophosphate (mp: < -20°C) and the like.

Examples of the ammonium compound and phosphonium compound (compound in which a cation represented by the above-mentioned $X^+$ is represented by the formula (d)) include trihexyl(tetradecyl)phosphonium tri(pentafluoroethyl)trifluorophosphate (mp: < -20°C), trihexyl(tetradecyl)phosphonium bis(trsfluoromethylsulfonyl)imide (mp: < 20°C), tetrabutylammonium bis(trifluoromethylsulfonyl)imide (mp: 92°C), ethyl-dimethyl-propylammonium bis(trifluoromethylsulfonyl)imide (mp: -11°C), N-ethyl-N,N-dimethyl-2-methoxyethylammonium tri(pentafluoroethyl)trifluorophosphate (mp: < -20°C), triethylaminenitric acid salt (mp: 12°C) and the like.

The content of the ionic liquid in the coating composition of the present invention is preferably from 0.3 to 20% by weight, more preferably from 0.5 to 15% by weight, and still more preferably from 1 to 10% by weight, from the viewpoint of antistatic properties under low humidity.

A weight ratio (resin modifier/ionic liquid) of the amount of the resin modifier to the amount of the ionic liquid in the coating composition of the present invention is preferably from 50/50 to 99/1, more preferably from 55/45 to 95/5, and still more preferably from 60/40 to 90/10, from the viewpoint of antistatic properties under low humidity. When the ionic liquid used in the coating composition of the present invention dissolves the other component containing the resin modifier of the present invention, the ionic liquid can be used as the organic solvent from the viewpoint of improvement in handling properties and simplification of the step.

It is also preferred that the coating composition of the present invention contains a conductive polymer from the viewpoint of an improvement in antistatic properties under low humidity, in addition to water resistance and transparency.
The conductive polymer in the present invention refers to a n-conjugated conductive polymer and a 5-conjugated conductive polymer. From the viewpoint of industrial availability, a n-conjugated conductive polymer is preferable. Examples of the n-conjugated conductive polymer include polythiophene, polypyrrole, polyisothianaphthene, polyaniline, polyacetylene, polyparaphenylene, polyphenylenevinylene, polythienylenevinylene, derivatives thereof, and the like. These conductive polymers can be used alone, or two or more kinds can be used in combination.
Among conductive polymers, from the viewpoint of industrial availability, polythiophene, polypyrrole, polyaniline, polyisothianaphthene, and derivatives thereof are preferable, and polythiophene, polypyrrole, polyaniline, and derivatives thereof are more preferably.
Specific examples of the polythiophene derivative include alkyl group-containing polythiophenes such as poly(3-methylthiophene), poly(3-hexylthiophene), poly(3-octylthiophene) and poly(3-dodecylthiophene); ether group-containing polythiophenes such as poly(3-methoxythiophene), poly(3-ethoxythiophene) and poly(3,4-ethylenedioxythiophene); sulfonic acid group-containing polythiophenes such as poly(3-sulfoethylthiophene) and poly(3-sulfobutylthiophene); carboxylic acid-containing polythiophenes such as poly(3-carboxythiophene); and the like.
Specific examples of the polypyrrole derivative include alkyl group-containing polypyrroles such as poly(3-methylpyrrole), poly(3-butylpyrrole), poly(3-decylpyrrole) and poly(3,4-dimethylpyrrole); ether group-containing polypyrroles such as poly(3-methoxypyrrole), poly(3-octoxypyrrole); hydroxy group-containing polypyrroles such as poly(3-hydroxypyrrole); carboxylic acid or carboxylic acid ester group-containing polypyrroles such as poly(3-carboxylpyrrole), poly(3-methyl-4-carboethoxypyrrole) and poly(3-methyl-4-carbobutoxypyrrole); and the like.
Specific examples of the polyisothianaphthene derivative include sulfonic acid group-containing polyisothianaphthenes such as poly(4-sulfoisothianaphthene) and the like.
Specific examples of the polyaniline derivative include alkyl group-containing polyanilines such as poly(2-methylaniline) and poly(2-octylaniline); sulfonic acid group-containing polyanilines such as poly(2-sulfoaniline) and poly(2-sulfo-5-methoxyaniline); and the like.
The weight average molecular weight of the conductive polymer is preferably from 200 to 1,000,000, more preferably from 300 to 500,000, and still more preferably from 500 to 300,000, from the viewpoint of antistatic properties under low humidity.
The content of the conductive polymer in the coating composition of the present invention is preferably from 0.1 to 20% by weight, more preferably from 0.5 to 10% by weight, and still more preferably from 1 to 5% by weight, from the viewpoint of antistatic properties under low humidity and transparency.
A weight ratio (resin modifier/conductive polymer) of the amount of the resin modifier to the amount of the conductive polymer in the coating composition of the present invention is preferably from 30/70 to 99/1, more preferably from 50/50 to 99/1, and still more preferably from 60/40 to 98/2, from the viewpoint of antistatic properties under low humidity.
The conductive polymer may be used in combination with the ionic liquid, or the conductive polymer may be used in place of the ionic liquid.

The coating composition of the present invention can contain water. From the viewpoint of suppressing deterioration of physical properties such as strength and transparency of the obtained coating film, the content of water in the coating composition is preferably less than 5% by weight, more preferably less than 1% by weight, and still more preferably the coating composition does not substantially contain water.

It is possible to mix, in addition to the above-mentioned components, ordinary used initiators, curing agents such as diisocyanate compounds, pigments, dyes, beads such as glass beads, polymer beads and inorganic beads, inorganic fillers such as calcium carbonate and talc, surface modifiers such as leveling agents, and additives such as stabilizers, ultraviolet absorbers and dispersing agents in the coating composition of the present invention.
The coating composition of the present invention preferably contains initiators such as UV initiators and photocation initiators from the viewpoint of acceleration of curing. For example, it is possible to use acetophenones, benzophenones, ketals, anthraquinones, thioxanthones, azo compound, peroxide, 2,3-dialkylsilane compounds, disulfide compounds, thiuram compounds, fluoroamine compound and the like. More specific examples thereof include 1-hydroxy-cyclohexyl-phenyl-ketone, 2-methyl-1[4-(methylthio)phenyl]-2-morpholinopropane-1-one, benzyl dimethyl ketone, 1-(4-dodecylphenyl)-2-hydroxy-2-methylpropane-1-one, 1-(4-isopropylphenyl)-2-hydroxy-2-methylpropane-1-one, benzophenone and the like.

The coating composition of the present invention can be produced by mixing the resin modifier of the present invention and, optionally, other components such as a resin or resin monomer capable of reacting with the coating composition by irradiation with active energy rays, an organic solvent, an ionic liquid, a conductive polymer and an initiator, followed by stirring. There is no particular limitation on mixing order of the respective components. From the viewpoint of solubility of the resin modifier of the present invention, it is preferred that the resin modifier of the present invention is mixed with an organic solvent and then mixed with other components. The temperature in case of mixing is preferably from 0 to 50°C, and more preferably from 5 to 40°C.

[Method for Producing Coating Film]

The coating film of the present invention is obtained by coating a base material with a coating composition containing the above-mentioned resin modifier of the present invention, optionally drying the coating composition, and then irradiating the coating film with active energy rays. From the viewpoint of hardness of the coating film, it is preferred that the coating composition further contains a resin or a resin monomer.
There is no particular limitation on the base material on which the coating composition of the present invention is applied. Examples of the base material include glass, cellulose-based resins such as triacetate cellulose (TAC) diacetyl cellulose and acetate butylate cellulose, polyester resins such as polyethylene terephthalate (PET), acrylic resin, polyurethane resins, polycarbonate resins, polysulfone resins, polyether resins, polyolefin resins, nitrile resins, polyetherketone resins, polyamide resins and the like.
There is no particular limitation on the coating method, and examples thereof include a bar coating method, a roll coater method, a screen method, a flexo method, a spin coating method, a dip method, a spray method, a slide coating method and the like. After coating, drying is performed under the conditions, for example, a drying temperature within a range from 50 to 150°C and a drying time within a range from 0.5 to 5 minutes.
From the viewpoint of suppressing damage of a resin base material on which the coating composition is applied, an irradiance of active energy rays is preferably controlled within a range from 10 to 500 mJ in case of using ultraviolet rays as active energy rays.

[Coating Film]

The coating film of the present invention is a coating film obtained by the above-mentioned production method.
The coating film of the present invention is a coating film including a structure represented by any one of the above formulas (IVa), (IVb), (IVc), (Va), (Vb) and (VC) in at least one portion.
In the formula (IVa), $R^{31}$, $R^2$, $R^3$, $R^4$, $R^5$, $R^6$, n and AO are the same as those in the compounds (Ia) and (II). In the formula (IVb), $R^{32}$, $R^2$, $R^3$, $R^4$, $R^5$ and $R^6$ are the same as those in the compounds (Ib) and (II). In the formula (IVc), $R^{33}$, $R^2$, $R^3$, $R^4$, $R^5$ and $R^6$ are the same as those in the compounds (Ic) and (II). In the formula (Va), $R^{31}$, $R^8$, $R^9$, n and AO are the same as those in the compounds (Ia) and (III). In the formula (Vb), $R^{32}$, $R^8$ and $R^9$ are the same as those in the compounds (Ib) and (III). In the formula (Vc), $R^{33}$, $R^8$ and $R^9$ are the same as those in the compounds (Ic) and (III).
It is possible to confirm whether structures represented by the above formulas (IVa), (IVb), (IVc), (Va), (Vb) and (Vc) exist in the coating film by extracting the coating film with an organic solvent and analyzing the extract through NMR, IR and the like, or performing mass spectrometry of a surface of the coating film using direct TOF-SIMS.
From the viewpoint of maintaining antistatic properties, a surface resistivity value of the coating film of the present invention is preferably $5 \times 10^{12}$ Ω or less, and more preferably $1 \times 10^{12}$ Ω or less. The surface resistivity value can be measured in accordance with the method described in Examples.
From the viewpoint of maintaining water resistance, the surface resistivity value of the coating film of the present invention after washed with water is preferably $1 \times 10^{13}$ Ω or less, more preferably $5 \times 10^{12}$ Ω or less, and more preferably $1 \times 10^{12}$ Ω or less.
From the viewpoint of transparency, the haze value of the coating film of the present invention is preferably 2% or less, and more preferably 1% or less. The haze value can be measured in accordance with the method described in Examples.
From the viewpoint of maintaining anti-fogging properties, the contact angle of the coating film of the present invention to water is preferably 30 degrees or less. The contact angle can be measured in accordance with the method described in Examples.
The coating film of the present invention can be used for protection of surfaces of various image devices, for example, liquid crystal displays (LCDs), touch panels, plasma display panels (PDPs), electroluminescences (ELs) and optical disks, coating of various lens and the like.

Examples

Specific Examples showing the present invention will be described below. Examples 1 to 30 and Comparative Examples 1 to 20 are Examples and Comparative Examples with respect to the compound (Ia). Examples 31 to 55 and Comparative Examples 21 to 39 are Examples and Comparative Examples with respect to the compound (Ib). Examples 56 to 73 and Comparative Examples 40 to 55 are Examples and Comparative Examples with respect to the compound (Ic). Evaluation items in Examples were measured in the following manners.

[Preparation of Resin Modifier Solution]

In the present Example, first, a resin modifier solution was prepared, and then the thus prepared resin modifier solution, a resin monomer, a curing agent (a UV initiator) and an organic solvent were mixed to produce coating compositions of Examples 1 to 73 and Comparative Examples 1 to 55. With respect to Examples 15 to 25, Examples 44 to 53, Examples 66 to 72, Comparative Examples 12 to 18, Comparative Examples 31 to 36 and Comparative Examples 49 to 53, an ionic liquid was further mixed. With respect to Examples 26 to 30, Examples 54 to 55, Example 73, Comparative Examples 19 to 20, Comparative Examples 37 to 39 and Comparative Examples 54 to 55, a conductive polymer was further mixed. In this case, the resin modifier solution according to the present Example was obtained by salt exchange or neutralization using a specific aqueous sulfate salt solution, or a sulfate composition and a specific ammonium salt or an amine. First, a method for producing an aqueous sulfate salt solution will be described and then a method for preparing a resin modifier solution by salt exchange using the aqueous sulfate salt solution thus produced and an ammonium salt will be described below. Then, a method for preparing a resin modifier solution by neutralization of a sulfate composition as an intermediate for the production of an aqueous sulfate salt solution, and an amine will be described. In Table 1 to Table 3, combinations of raw materials of anion moieties of resin modifiers 1a to 1j, 1m, 1n, 1o, 2a to 2l and 3a to 3f to be produced, and raw materials of cation moieties are shown.

<1. Production of Aqueous Sulfate Salt Solution>

(Production Example 1)

An aliphatic alcohol having 12 carbon atoms (manufactured by Kao Corporation under the product name of KALCOL 2098) (500 g) and 0.75 g of KOH were charged in an autoclave equipped with a stirrer, a temperature control device and an automatic introducing device, and then dehydrated at 110°C under 13 hPa for 30 minutes. After dehydration, replacement by a nitrogen gas was performed and the temperature was raised to 120°C, and then 355 g of ethylene oxide (EO) was charged. After performing an addition reaction and aging at 120°C over 4 hours, and cooling to 80°C, the unreacted EO was removed under 40 hPa for 30 minutes. After removal of the unreacted EO, 0.8 g of acetic acid was added in the autoclave and the mixture was stirred at 80°C for 30 minutes, and then extraction was performed to obtain an alkoxylate in which an average EO addition molar number is 3 mol.

The obtained alkoxylate was sulfated by falling-thin film reactor using a $SO_3$ gas to obtain a poly(3)oxyethylene lauryl ether sulfate composition. The composition (A) (100 g) was neutralized by adding dropwise in 322 g of an aqueous 3.1% by weight NaOH solution to obtain an aqueous sodium poly(3)oxyethylene lauryl ether sulfate solution. The concentration of an active component (% by weight) was measured by the Epton method (JIS K3306). As a result, it was 25% by weight. In the present invention, "poly(3)oxyethylene" means that an average addition molar number n of an ethylene oxide group is 3. The same shall apply hereinafter.

(Production Example 2)

In the same manner as in Production Example 1, except that 500 g of an aliphatic alcohol having 12 carbon atoms (manufactured by Kao Corporation under the product name of KALCOL 2098), 0.75 g of KOH, 2,011 g of EO and 0.8 g of acetic acid were used, an aqueous sodium poly(17)oxyethylene lauryl ether sulfate solution (active component of 25% by weight) was obtained.

(Production Example 3)

In the same manner as in Production Example 1, except that 300 g of an aliphatic alcohol having 12 carbon atoms (manufactured by Kao Corporation under the product name of KALCOL 2098), 0.45 g of KOH, 3,550 g of EO and 0.48 g of acetic acid were used, an aqueous sodium poly(50)oxyethylene lauryl ether sulfate solution (active component of 25% by weight) was obtained.

(Production Example 4)

In the same manner as in Production Example 1, except that 300 g of oleyl alcohol having 18 carbon atoms (reagent, manufactured by Wako Pure Chemical Industries, Ltd.), 0.31 g of KOH, 1,133 g of EO and 0.33 g of acetic acid were used, an aqueous sodium poly(23)oxyethylene oleyl ether sulfate solution (active component of 25% by weight) was obtained.

(Production Example 5)

In the same manner as in Production Example 1, except that sulfation and neutralization were performed using 500 g of poly(3)oxyethylene methyl ether (manufactured by NIHON EMULSION Co., Ltd. under the product name of Methyl Tri Glycol) as alkoxylate, an aqueous sodium poly(3)oxyethylene methyl ether sulfate solution was obtained. As the active component of the compound, 52% by weight of a residual component (solid component) subjected to vacuum drying at 70°C under 200 hPa for 5 hours was used.

(Production Example 6)

In the same manner as in Production Example 1, except that 300 g of palmityl alcohol having 16 carbon atoms (manufactured by Kao Corporation under the product name of KALCOL 6098), 0.35 g of KOH, 55 g of EO and 0.38 g of acetic acid were used, an aqueous sodium poly(1)oxyethylene palmityl ether sulfate solution (active component 10% by weight) was obtained.

(Production Example 7)

In the same manner as in Production Example 1, except that 300 g of decyl alcohol having 10 carbon atoms (manufactured by Kao Corporation under the product name of KALCOL 1098), 0.53 g of KOH, 167 g of EO and 0.57 g of acetic acid were used, an aqueous sodium poly(2)oxyethylene decyl ether sulfate solution (active component 25% by weight) was obtained.

(Production Example 8)

An alcohol having 16 carbon atoms (reagent 2-hexyldecanol, manufactured by Sigma-Aldrich Corporation) (300 g) was sulfated by a falling-thin film reactor using a $SO_2$ gas to obtain a 2-hexyl-decyl sulfate composition. The sulfate composition (A) (15 g) was neutralized by adding dropwise in 125 g of an aqueous 1.5% NaOH solution to obtain an aqueous sodium 2-hexyl-decyl sulfate solution. The concentration of the active component (% by weight) was measured by the Epton method (JIS K3306). As a result, it was 25% by weight. This compound was used in the preparation of a resin modifier solution 2d.

<2. Preparation of Resin Modifier Solution>

In accordance with the following methods, resin modifier solutions 1a to 1j, 1m, 1n, 1o, 2a to 2l and 3a to 3f were obtained. Each mixing amount is as shown in Table 1 to Table 3.

[Production Method 1]

(Resin Modifier Solution 1a)

The aqueous sodium poly(3)oxyethylene lauryl ether sulfate solution (100 g) obtained in Production Example 1 and 16.4 g of 1-(acrylamidepropyl)trimethylammonium chloride were charged in a recovery flask and the recovery flask was set in a rotary evaporator (ROTARY EBAPORATOR N-1000, manufactured by TOKYO RIKAKIKAI CO., LTD.) and then rotational stirring (rotational speed: SPEED 4) was performed at room temperature (25°C) under normal pressure (1,013 hPa) for 5 minutes. Then, moisture was removed while blowing leaked air to a sample at 40°C under 300 hPa and then moisture was removed at 40°C under 1 hPa for 2 hours. After adding 45 g of isopropyl alcohol in the recovery flask, rotary stirring was performed by a rotary evaporator at room temperature under normal pressure for 30 minutes. The obtained suspension was filtered through a 0.2 μm membrane to obtain a resin modifier solution a (solid component of 43% by weight).

(Resin Modifier Solutions 1b to 1d, 1f to 1i, 1m, 1n and 1o)

In the same manner as in the preparation of the resin modifier solution a, except that 100 g of the aqueous sodium poly(3)oxyethylene lauryl ether sulfate solution and 16.4 g of 1-(acrylamidepropyl)trimethylammonium chloride were changed to materials in Table 1 and also the use amounts are as shown in Table 1, resin modifier solutions 1b to 1d, 1f to 1i, 1m, 1n and 1o were obtained.

[Production Method 2]

(Resin Modifier Solutions 1e)

The poly(3)oxyethylene lauryl ether sulfate composition obtained as the intermediate of Production Example 1 was used as 100% by weight of an active component. In a four-necked flask equipped with a stirrer, charged with 50 g of isopropyl alcohol and 8.8 g of allyldimethylamine, 41.2 g of a poly(3)oxyethylene lauryl ether sulfate composition was added dropwise under a nitrogen gas flow over 20 minutes while ice cooling. Furthermore, aging was performed for 10 minutes to obtain a resin modifier solution 1e. The amount of the residual component (solid component) subjected to vacuum drying at 120°C under 200 hPa for 5 hours was 50% by weight.

(Resin Modifier Solution 1j)

In the same manner as in the preparation of the resin modifier solution 1e, except that 8.8 g of allyldimethylamine was changed to 15.4 g of Triethanolamine, a resin modifier solution 1j was obtained.

[Production Method 3]

(Resin Modifier Solution 2a)

In a recovery flask, 25 g of sodium lauryl sulfate (reagent, manufactured by Sigma-Aldrich Corporation) was dissolved in 75 g of ion-exchange water. To the solution, 23.9 g of 1-(acrylamidepropyl)trimethylammonium chloride (reagent, manufactured by Tokyo Chemical Industry Co., Ltd.) was added, and the recovery flask was set in a rotary evaporator (ROTARY EBAPORATOR N-1000, manufactured by TOKYO RIKAKIKAI CO., LTD.) and then rotational stirring (rotational speed: SPEED 4) was performed at room temperature (25°C) under normal pressure (1,013 hPa) for 5 minutes. Then, moisture was removed while blowing leaked air to a sample at 40°C under 300 hPa and moisture was removed at 40°C under 300 hPa for 2 hours and then moisture was removed at 40°C under 1 hPa for 2 hours. After adding 40 g of isopropyl alcohol in the recovery flask, rotary stirring was performed by a rotary evaporator at room temperature under normal pressure for 30 minutes. The obtained suspension was filtered through a 0.2 μm membrane to obtain a resin modifier solution 2a (solid component of 49% by weight).

(Resin Modifier Solutions 2b to 2e, and 2h to 21)

In the same manner as in the preparation of the resin modifier solution 2a, except that the aqueous sodium lauryl sulfate solution and 1-(acrylamidepropyl)trimethylammonium chloride were changed to materials in Table 2 and also the use amounts are as shown in Table 2, resin modifier solutions 2b to 2e, and 2h to 21 were obtained.

[Production Method 4]

(Resin Modifier Solution 2f)

An alcohol having 12 carbon atoms (manufactured by Kao Corporation under the product name of KALCOL 2098) (300 g) was sulfated by a falling-thin film reactor using a $SO_3$ gas to obtain a lauryl sulfate composition. In a 100ml four-necked flask equipped with a stirrer, 3.3 g of dimethylallylamine (reagent, manufactured by Tokyo Chemical Industry Co., Ltd.) and 19.8 g of isopropyl alcohol were charged and then 10 g of the lauryl sulfate composition was added dropwise over 5 minutes under a nitrogen gas flow while stirring at 100 rpm under ice cooling to obtain a resin modifier solution 2f (solid component of 40% by weight).

(Resin Modifier Solution 2g)

In the same manner as in the preparation of the resin modifier solution 2f, except that 3.3 g of dimethylallylamine was changed to 5.7 g of triethanolamine (reagent, manufactured by Wako Pure Chemical Industries, Ltd.), a resin modifier solution 2 g was obtained.

[Production Method 5]

(Resin Modifier Solution 3a)

In a recovery flask, 25 g of sodium decane sulfonate (reagent, manufactured by Sigma-Aldrich Corporation) was dissolved in 75 g of ion-exchange water. To the solution, 29.0 g of 1-(acrylamidepropyl)trimethylammonium chloride (reagent, manufactured by Tokyo Chemical Industry Co., Ltd.) was added, and the recovery flask was set in a rotary evaporator (ROTARY EBAPORATOR N-1000, manufactured by TOKYO RIKAKIKAI CO., LTD.) and then rotational stirring (rotational speed: SPEED 4) was performed at room temperature (25°C) under normal pressure (1,013 hPa) for 5 minutes. Then, moisture was removed while blowing leaked air to a sample at 40°C under 300 hPa for 2 hours and then moisture was removed at 40°C under 1 hPa for 2 hours. After adding 40 g of isopropyl alcohol in the recovery flask, rotary stirring was performed by a rotary evaporator at room temperature under normal pressure for 30 minutes. The obtained suspension was filtered through a 0.2 μm membrane to obtain a resin modifier solution 3a (solid component of 46% by weight).

(Resin Modifier Solutions 3b to 3f)

In the same manner as in the preparation of the resin modifier solution 3a, except that the aqueous sodium decane sulfonate solution and 1-(acrylamidepropyl)trimethylammonium chloride were changed to materials in Table 3 and also the use amounts are as shown in Table 3, resin modifier solutions 3b to 3f were obtained.

<3. Production of Ionic Liquid>

In the present Example, a commercially available reagent was used, except for 1-ethyl-3-hydroxyethylimidazolium bromide.

(Production Example 9) Production of 1-ethyl-3-hydroxyethylimidazolium bromide

In a four-necked flask equipped with a stirrer, charged with 150 g of 2-bromoethanol (reagent manufactured by Wako Pure Chemical Industries, Ltd.), 173 g of 1-ethylimidazole (reagent, manufactured by Tokyo Chemical Industry Co., Ltd.) was added dropwise over 2 hours while ice cooling under a nitrogen gas flow. After removing ice cooling, the temperature inside the reaction system was returned to room temperature (25°C). After ten minutes have passed after returning to room temperature, heating was performed by a water bath at 60°C. After heating for 15 hours, the water bath was removed and the temperature was returned to room temperature. The reaction product was transferred to a separatory funnel, washed five times with 500 ml of diethylether and then washed five times with 500 ml of ethyl acetate. The solvent dissolved at 70°C under 10 hPa was removed from the washed product to obtain 238 g of the objective 1-ethyl-3-hydroxyethylimidazolium bromide.

[Table 1]

| Resin modifier solution | Production method | Raw compound of resin modifier | | | | | | Organic solvent in case of production of resin modifier | Solid component of resin modifier solution (% by weight) |
|---|---|---|---|---|---|---|---|---|---|
| | | Anion moiety | | | Cation moiety | | | | |
| | | Compound | Active component (% by weight) | Use amount (g) | Compound | Active component (% by weight) | Use amount (g) | | |
| 1a | 1 | Aqueous sodium poly(3) oxyethylene lauryl ether sulfate solution | 25 | 100 | 1-(acrylamidepropyl) trimethylammonium chloride 1) | 75 | 16.4 | Isopropyl alcohol | 43 |
| 1b | 1 | Aqueous sodium poly(17) oxyethylene lauryl ether sulfate solution | 25 | 100 | 1-(acrylamidepropyl) trimethylammonium chloride 1) | 75 | 6.6 | Isopropyl alcohol | 42 |
| 1c | 1 | Aqueous sodium poly(17) oxyethylene lauryl ether sulfate solution | 25 | 100 | Diallyldimethylammonium choride 2) | 65 | 6.0 | Isopropyl alcohol | 48 |
| 1d | 1 | Aqueous sodium poly(50) oxyethylene lauryl ether sulfate solution | 25 | 100 | Diallyldimethylammonium choride 2) | 65 | 2.5 | Isopropyl alcohol | 48 |
| 1e | 2 | Poly (3) oxyethylene lauryl ether sulfate composition | 100 | 41.2 | Allyldimethylamine 2) | 100 | 8.8 | Isopropyl alcohol | 50 |

(continued)

| Resin modifier solution | Production method | Raw compound of resin modifier | | | | | | Organic solvent in case of production of resin modifier | Solid component of resin modifier solution (% by weight) |
|---|---|---|---|---|---|---|---|---|---|
| | | Anion moiety | | | Cation moiety | | | | |
| | | Compound | Active component (% by weight) | Use amount (g) | Compound | Active component (% by weight) | Use amount (g) | | |
| 1f | 1 | Aqueous sodium poly(23) oxyethylene oleyl ether sulfate solution | 25 | 100 | 1-(acrylamidepropyl) trimethylammonium chloride 1) | 75 | 5.2 | Isopropyl alcohol | 50 |
| 1g | 1 | Aqueous sodium perchlorate solution 3) | 50 | 19.7 | 1-(acrylamidepropyl) trimethylammonium chloride 1 | 75 | 22.1 | Methanol | 55 |
| 1h | 1 | Aqueous methanesulfonic acid solution 4) | 30 | 21.4 | 1-(acrylamidepropyl) trimethylammonium chloride 1) | 75 | 15.0 | Methanol | 26 |
| 1i | 1 | Aqueous methanesulfonic acid solution 4) | 30 | 21.4 | Diallyldimethylammonium choride 2) | 65 | 13.5 | Isopropyl alcohol | 46 |
| 1j | 2 | Poly (3) oxyethylene lauryl ether sulfate composition | 100 | 41.2 | Triethanolamine 2) | 100 | 15.4 | Isopropyl alcohol | 50 |
| 1m | 1 | Aqueous sodium poly(3) oxyethylene methyl ether sulfate solution | 52 | 40 | 1-(acrylamidepropyl) trimethylammonium chloride 1) | 75 | 21.6 | Isopropyl alcohol | 51 |
| 1n | 1 | Aqueous sodium poly(2) oxyethylene palmityl ether sulfate solution | 10 | 100 | Diallyldimethylammonium choride 2) | 65 | 6.4 | Isopropyl alcohol | 49 |

(continued)

| Resin modifier solution | Production method | Raw compound of resin modifier | | | | | | Organic solvent in case of production of resin modifier | Solid component of resin modifier solution (% by weight) |
|---|---|---|---|---|---|---|---|---|---|
| | | Anion moiety | | | Cation moiety | | | | |
| | | Compound | Active component (% by weight) | Use amount (g) | Compound | Active component (% by weight) | Use amount (g) | | |
| 1o | 1 | Aqueous sodium poly(2) oxyethylene decyl ether sulfate solution | 25 | 50 | 1-(acrylamidepropyl) trimethylammonium chloride 1) | 75 | 9.9 | Isopropyl alcohol | 65 |

1) Reagent manufactured by Tokyo Chemical Industry Co., Ltd.
2) Reagent manufactured by Wako Pure Chemical Industries, Ltd.
3) prepared by diluting sodium perchlorate monohydrate (reagent manufactured by Wako Pure Chemical Industries, Ltd.) with ion-exchange water
4) prepared by diluting methanesulfonic acid (reagent manufactured by Wako Pure Chemical Industries, Ltd.) with ion-exchange water

[Table 2]

| Resin modi fier solution | Production method | Raw compound of resin modifier | | | | | | Organic solvent in case of production of resin modifier | Solid component of resin modifier solution (% by weight) |
|---|---|---|---|---|---|---|---|---|---|
| | | Anion moiety | | | Cation moiety | | | | |
| | | Compound | Active component (% by weight) | Use amount (g) | Compound | Active component (% by weight) | Use amount (g) | | |
| 2a | 3 | Aqueoussodium lauryl sulfate solution 1) | 25 | 100 | 1-(acrylamidepropyl) trimethylammonium chloride 2) | 75 | 23.9 | Isopropyl alcohol | 49 |
| 2b | 3 | Aqueoussodium myristyl sulfate solution 1) | 10 | 250 | 1-(acrylamidepropyl) Trimethylammonium chloride 2) | 75 | 21.7 | Isopropyl alcohol | 25 |
| 2c | 3 | Aqueoussodium decyl sulfate solution 1) | 25 | 50 | 1-(acrylamidepropyl) trimethylammonium chloride 2) | 75 | 13.2 | Isopropyl alcohol | 47 |
| 2d | 3 | Aqueoussodium 2-hexyl-decyl sulfate solution | 10 | 100 | 1-(acrylamidepropyl) trimethylammonium chloride 2) | 75 | 8.0 | Isopropyl alcohol | 28 |
| 2e | 3 | Aqueoussodium decyl sulfate solution 1) | 25 | 100 | Diallyldimethylammonium choride 3) | 65 | 23.9 | Isopropyl alcohol | 50 |
| 2f | 4 | Lauryl sulfate composition | 100 | 10 | Dimethylallylamine 2) | 14.2 | 23.1 | Isopropyl alcohol | 40 |
| 2g | 4 | Lauryl sulfate composition | 100 | 10 | Triethanolamine 3) | 19.5 | 29.3 | Isopropyl alcohol | 40 |
| 2h | 3 | Aqueoussodium paratoluene sulfonate solution 4) | 10 | 100 | 1-(acrylamidepropyl) trimethylammonium chloride 2) | 75 | 14.2 | Isopropyl alcohol | 40 |
| 2i | 3 | Aqueoussodium metasulfonate solution 4) | 30 | 21.4 | 1-(acrylamidepropyl) trimethylammonium chloride 2) | 75 | 15.0 | Methanol | 26 |

(continued)

| Resin modi fier solution | Production method | Raw compound of resin modifier | | | | | | Organic solvent in case of production of resin modifier | Solid component of resin modifier solution (% by weight) |
|---|---|---|---|---|---|---|---|---|---|
| | | Anion moiety | | | Cation moiety | | | | |
| | | Compound | Active component (% by weight) | Use amount (g) | Compound | Active component (% by weight) | Use amount (g) | | |
| 2j | 3 | Aqueoussodium metasulfonate solution 4) | 30 | 21.4 | Diallyldimethylammonium choride 3) | 65 | 13.5 | Isopropyl alcohol | 46 |
| 2k | 3 | Aqueoussodium octyl sulfonate solution 5) | 34 | 60.8 | 1-(acrylamidepropyl) trimethylammonium chloride 2) | 75 | 24.9 | Isopropyl alcohol | 50 |
| 2l | 3 | Aqueoussodium palmityl sulfonate solution 6) | 10 | 106.7 | Diallyldimethylammonium choride 3) | 65 | 7.7 | Isopropyl alcohol | 48 |

1) prepared by diluting reagent Sigma-Aldrich Corporation with ion-exchange water
2) Reagent manufactured by Tokyo Chemical Industry Co., Ltd.
3) Reagent manufactured by Wako Pure Chemical Industries, Ltd.
4) prepared by diluting reagent manufactured by Wako Pure Chemical Industries, Ltd. with ion-exchange water
5) prepared by diluting reagent manufactured by Kanto Chemical Co., Ltd. with ion-exchange water
6) prepared by diluting reagent manufactured by Wako Pure Chemical Industries, Ltd. with ion-exchange water/ethanol mixed solution (in weight ratio of 3/1)

[Table 3]

| Resin modifier solution | Raw compound of resin modifier | | | | | | Organic solvent in case of production of resin modifier | Solid component of resin modifier solution (% by weight) |
|---|---|---|---|---|---|---|---|---|
| | Anion moiety | | | Cation moiety | | | | |
| | Compound | Active component (% by weight) | Use amount (g) | Compound | Active component (% by weight) | Use amount (g) | | |
| 3a | Aqueous sodium decane sulfate solution 1) | 25 | 100 | 1-(acrylamidepropyl) trimethylammonium chloride 2) | 75 | 29.0 | Isopropyl alcohol | 46 |
| 3b | Aqueous sodium pentadecane sulfate solution 4) | 20 | 150 | 1-(acrylamidepropyl) trimethylammonium chloride 2) | 75 | 24.7 | Isopropyl alcohol | 47 |
| 3c | Aqueous sodium decane sulfate solution 1) | 25 | 100 | Diallyldimethylammonium chloride 3) | 65 | 25.0 | Isopropyl alcohol | 45 |
| 3d | Aqueous sodium paratoluene sulfonate solution 5) | 10 | 100 | 1-(acrylamidepropyl) trimethylammonium chloride 2) | 75 | 14.2 | Isopropyl alcohol | 40 |
| 3e | Aqueous sodium metanesulfonate solution 5) | 30 | 21.4 | 1-(acrylamidepropyl) trimethylammonium chloride 2) | 75 | 15.0 | Methanol | 26 |
| 3f | Aqueous sodium metanesulfonate solution 5) | 30 | 21.4 | Diallyldimethylammonium choride 3) | 65 | 13.5 | Isopropyl alcohol | 46 |

1) prepared by diluting reagent Sigma-Aldrich Corporation with ion-exchange water
2) Reagent manufactured by Tokyo Chemical Industry Co., Ltd.
3) Reagent manufactured by Wako Pure Chemical Industries, Ltd.
4) Mersolat H95 (manufactured by LANXESS Corp)
5) prepared by diluting reagent manufactured by Wako Pure Chemical Industries, Ltd. with ion-exchange water

Then, preparation of the coating composition will be described. Table 4 to Table 30 are tables in which the compositions of coating compositions (Examples 1 to 73 and Comparative Examples 1 to 55) and physical properties thereof are shown. In Table 4 to Table 8, Table 11, Table 13 to Table 17, Table 20, Table 22 to Table 26 and Table 29, the resin modifiers 1a to 1j, 1m, 1n, 1o, 2a to 2l and 3a to 3f are resin modifiers produced by combinations shown in Tables 1 to 3.

[Preparation of Coating Composition]

Coating compositions containing a resin modifier with compositions shown in Table 4 to Table 6, Table 13 to Table 15 and Table 22 to Table 24 were prepared as Examples 1 to 14, Comparative Examples 1 to 10, Examples 31 to 43, Comparative Examples 21 to 29, Examples 56 to 65 and Comparative Examples 40 to 47 by mixing an acrylic resin (dipentaerythritol hexaacrylate (DPHA), manufactured by DAICEL-CYTEC Company LTD.) as a resin capable of reacting by irradiation with active energy rays; Irgacure 184 (manufactured by Ciba Specialty Chemicals Corp.) as a curing agent; an organic solvent; and the above-mentioned resin modifier solution as a resin modifier. With respect to Examples 15 to 25, Comparative Examples 11 to 18, Examples 44 to 53, Comparative Examples 30 to 36, Examples 66 to 72 and Comparative Examples 48 to 53, coating compositions containing a resin modifier with each composition shown in Table 7, Table 8, Table 16, Table 17, Table 25 and Table 26 were prepared by mixing an ionic liquid in addition to the above components. With respect to Examples 26 to 30, Comparative Examples 19 to 20, Examples 54 to 55, Comparative Examples 37 to 39, Example 73 and Comparative Examples 54 to 55, coating compositions containing a resin modifier with the composition shown in Table 11, Table 20 and Table 29 were prepared by mixing a conductive polymer.

Isopropyl alcohol was used as the organic solvent in Examples 1 to 73, Comparative Examples 1 to 4, 7, 8, 10 to 14, 17 to 23, 26 to 32, 35 to 41, 44 to 49 and 52 to 55, and methanol was used in Comparative Examples 5, 6, 9, 15, 16, 24, 25, 33, 34, 42, 43, 50 and 51. Each mixing amount was as shown in Table 4 to Table 8, Table 11, Table 13 to Table 17, Table 20, Table 22 to Table 26 and Table 29. Each mixing amount shown in Table 4 to Table 6, Table 13 to Table 15 and Table 22 to Table 24 shows each number of parts by weight when the total weight (solid component) of a resin capable of reacting by irradiating with active energy rays, a curing agent and an active component of a resin modifier is 100 parts by weight. Each mixing amount shown in Table 7, Table 8, Table 16, Table 17, Table 25 and Table 26 shows each number of parts by weight when the total weight (solid component) of a resin capable of reacting by irradiating with active energy rays, a curing agent, an active component of a resin modifier and an ionic liquid is 100 parts by weight. Each mixing amount shown in Table 11, Table 20 and Table 29 shows each number of parts by weight when the total weight (solid component) of a resin capable of reacting by irradiating with active energy rays, a curing agent, an active component of a resin modifier and a conductive polymer is 100 parts by weight.

[Formation of Coating Film]

Each of the obtained coating compositions was applied over nearly the whole surface of a cellulose triacetate (TAC) film (10 cm in width ×12 cm in length ×80 μm in thickness) so that a coating film after UV irradiation has a thickness of 4 μm using a bar coater (gap: 9 to 13 μm) and then dried under the drying conditions shown in Table 4 to Table 6, Table 9, Table 10, Table 12, Table 13 to Table 15, Table 18, Table 19, Table 21, Table 22 to Table 24, Table 27, Table 28 and Table 30. The film after drying was UV irradiated (200 mJ) by a UV irradiation apparatus (HTE-505HA, manufactured by High-Tech Corp., using UV lamp, Model USH-500MB) under a nitrogen gas flow to obtain a coating film (4 μm in thickness). The coating thickness was measured at three points, for example, an upper portion, a center portion and a lower portion on a center line of a width of a coated surface and an average was used.

[Surface Resistivity Value (Antistatic Properties) of Coating Film]

With respect to coating films (Examples 1 to 11, Examples 15 to 30, Examples 31 to 40, Examples 44 to 55, Examples 56 to 62, Examples 66 to 73, Comparative Examples 1 to 7, Comparative Examples 11 to 20, Comparative Examples 21 to 26, Comparative Examples 30 to 39, Comparative Examples 40 to 44 and Comparative Examples 48 to 55), a surface resistivity value at the center of the film was measured in a room adjusted to temperature of 25°C and a relative humidity of 45% by an A-4329 type high resistance meter (manufactured by YHP Manufacturing International Corp.). The smaller the numerical value of the surface resistivity value, the more antistatic properties are excellent.

The results are shown in Table 4, Table 5, Table 9, Table 10, Table 12, Table 13, Table 14, Table 18, Table 19, Table 21, Table 22, Table 23, Table 27, Table 28 and Table 30.

[Surface Resistivity Value (Low-Humidity Antistatic Properties) of Coating Film]

With respect to coating films (Examples 15 to 30, Examples 44 to 55, Examples 66 to 73, Comparative Examples 11 to 20, Comparative Examples 30 to 39 and Comparative Examples 48 to 55), the measurement was performed in a dry room (manufactured by ITSUWA Co., Ltd.) adjusted to a temperature of 25°C and a dew pint temperature of -60°C to -70°C by the above-mentioned method in a dry room after storage for 72 hours.
The results are shown in Table 9, Table 10, Table 12, Table 18, Table 19, Table 21, Table 27, Table 28 and Table 30.

[Surface Resistivity Value (Water Resistance) of Coating Film after Washing with Water)]

With respect to coating films (Examples 1 to 11, Examples 15 to 30, Examples 31 to 40, Examples 44 to 55, Examples 56 to 62, Examples 66 to 73, Comparative Examples 1 to 7, Comparative Examples 11 to 20, Comparative Examples 21 to 26, Comparative Examples 30 to 39, Comparative Examples 40 to 44 and Comparative Examples 48 to 55), a surface resistivity value was measured after washing with water. The coating film was washed with water under the following conditions. While allowing city water to flow from a faucet of a water pipe having an inner diameter of 14 mm at a flow rate of 10 L/min, a test film was arranged at the location of 10 cm immediately under the faucet so as to vertically pour city water, and then washed with water while moving so as to uniformly pour water on the coating surface for 30 seconds. Then, water on the coating surface was removed by Hyper-Dry Paper Towel manufactured by NIPPON PAPER CRECIA Co., LTD. and then dried at a temperature of 25°C and a humidity of 45% by sending air until droplets disappear. The smaller the numerical value of the surface resistivity value, the more antistatic properties are excellent.
The results are shown in Table 4, Table 5, Table 9, Table 10, Table 12, Table 13, Table 14, Table 18, Table 19, Table 21, Table 22, Table 23, Table 27, Table 28 and Table 30.

[Haze Value (Transparency) of Coating Film]

With respect to coating films (Examples 1 to 11, Examples 15 to 30, Examples 31 to 40, Examples 44 to 55, Examples 56 to 62, Examples 66 to 73, Comparative Examples 1 to 7, Comparative Examples 11 to 20, Comparative Examples 21 to 26, Comparative Examples 30 to 39, Comparative Examples 40 to 44 and Comparative Examples 48 to 55), the haze value was determined using a haze meter HM-150 manufactured by MURAKAMI COLOR RESEARCH LABORATORY CO., Ltd. in accordance with JIS K7105 (Test Method of Optical Characteristics of Plastic) (5.5 and 6.4)). Specifically, using Integrating Sphere type Spectrophotometric Transmittnace Meter, a diffusion light transmittance and a total light transmittance were measured and the haze value was expressed by a ratio. The smaller the numerical value of the haze value, the more transparency is excellent.
The results are shown in Table 4, Table 5, Table 9, Table 10, Table 12, Table 13, Table 14, Table 18, Table 19, Table 21, Table 22, Table 23, Table 27, Table 28 and Table 30.

[Contact Angle of Coating Film]

With respect to coating films (Examples 12 to 14, Comparative Examples 8 to 10, Examples 41 to 43, Comparative Examples 27 to 29, Examples 63 to 65 and Comparative Examples 45 to 47), a contact angle to water was measured using a contact angle meter CA-A manufactured by Kyowa Interface Science Co., Ltd. The smaller the contact angle to water, the more water spreads widely in case water undergoes coagulation. Therefore, diffused reflection does not occur, resulting in obtaining of anti-fogging effect.
The results are shown in Table 6, Table 15 and Table 24.
[Table 4]

| | Coating composition | | | | | | | | Drying conditions of coating film | | Evaluation of coating film | | |
|---|---|---|---|---|---|---|---|---|---|---|---|---|---|
| | Resin modifier | | | Mixing amount (parts by weight) | | | Organic solvent | Solid component (% by weight) | | | | | |
| | Kind | Anion moiety | Cation moiety | Resin modifier (active component) | DPHA 4) | Curing agent 3) | | | Temperature (°C) | Time (minute) | Antistatic properties (Ω) | Water resistance (Ω) | Transparency (%) |
| Example 1 | 1a | Poly(3) oxyethylene lauryl ether sulfate | 1-(acrylamidepropyl) trimethylammonium | 20 | 75 | 5 | IPA 1) | 60 | 70 | 1 | 5.0E+09 | 1.0E+10 | 0.4 |
| Example 2 | 1b | Poly(17) oxyethylene lauryl ether sulfate | 1-(acrylamidepropyl) trimethylammonium | 20 | 75 | 5 | IPA | 60 | 70 | 1 | 3.2E+10 | 2.5E+10 | 0.2 |
| Example 3 | 1f | Poly(23) oxyethylene oleyl ether sulfate | 1-(acrylamidepropyl) trimethylammonium | 20 | 75 | 5 | IPA | 60 | 70 | 1 | 5.2E+10 | 6.2E+10 | 0.2 |
| Example 4 | 1a | Poly(3) oxyethylene lauryl ether sulfate | 1-(acrylamidepropyl) trimethylammonium | 5 | 90 | 5 | IPA | 50 | 100 | 2 | 3.2E+10 | 3.2E+11 | 0.2 |
| Example 5 | 1b | Poly(17) oxyethylene lauryl ether sulfate | 1-(acrylamidepropyl) trimethylammonium | 5 | 90 | 5 | IPA | 50 | 100 | 2 | 1.0E+11 | 7.9E+11 | 0.2 |

(continued)

| | Coating composition | | | | | | | | Drying conditions of coating film | | Evaluation of coating film | | |
|---|---|---|---|---|---|---|---|---|---|---|---|---|---|
| | Resin modifier | | | Mixing amount (parts by weight) | | | Organic solvent | Solid component (% by weight) | | | | | |
| | Kind | Anion moiety | Cation moiety | Resin modifier (active component) | DPHA 4) | Curing agent 3) | | | Temperature (°C) | Time (minute) | Antistatic properties (Ω) | Water resistance (Ω) | Transparency (%) |
| Example 6 | 1c | Poly(17) oxyethylene lauryl ether sulfate | Diallyldimethyl ammonium | 5 | 90 | 5 | IPA | 50 | 100 | 2 | 1.0E+12 | 7.9E+12 | 0.2 |
| Example 7 | 1d | Poly(50) oxyethylene lauryl ether sulfate | Diallyldimethyl ammonium | 5 | 90 | 5 | IPA | 50 | 100 | 2 | 1.0E+12 | 7.9E+12 | 0.3 |
| Example 8 | 1e | Poly(3) oxyethylene lauryl ether sulfate | Allyldimethylamine | 5 | 90 | 5 | IPA | 50 | 100 | 2 | 1.6E+12 | 8.0E+12 | 0.2 |
| Example 9 Example | 1a | Poly(3) oxyethylene lauryl ether sulfate | 1-(acrylamidepropyl) trimethylammonium | 3 | 92 | 5 | IPA | 50 | 100 | 2 | 1.0E+11 | 2.5E+12 | 0.2 |
| Example 10 | 1m | Poly(3) oxyethylene methyl ether sulfate | 1-(acrylamidepropyl) trimethylammonium | 20 | 75 | 5 | IPA | 60 | 70 | 1 | 3.1E+11 | 1.0E+11 | 0.2 |

(continued)

| | Coating composition | | | | | | | | | Drying conditions of coating film | | Evaluation of coating film | | |
|---|---|---|---|---|---|---|---|---|---|---|---|---|---|---|
| | Resin modifier | | | Mixing amount (parts by weight) | | | Organic solvent | Solid component (% by weight) | | | | | | |
| | Kind | Anion moiety | Cation moiety | Resin modifier (active component) | DPHA 4) | Curing agent 3) | | | | Temperature (°C) | Time (minute) | Antistatic properties (Ω) | Water resistance (Ω) | Transparency (%) |
| Example 11 | 1n | Poly(1) oxyethylene palmityl ether sulfate | Diallyldimethyl ammonium | 7 | 88 | 5 | IPA | 60 | | 70 | 1 | 3.7E+10 | 2.1E+11 | 0.3 |

Note 1): In Table 4, poly(1)oxyethylene, poly(3)oxyethylene, poly(17)oxyethylene, poly(23)oxyethylene and poly(50)oxyethylene mean that average addition molar numbers of an ethylene oxide group are respectively 1, 3, 17, 23 and 50.
1) IPA: Isopropyl alcohol
3) Curing agent: Irgacure 184 (manufactured by Ciba Specialty Chemicals Inc.)
4) DPHA: Dipentaerythritol hexaacrylate

[Table 5]

| | Coating composition | | | | | | | | Drying conditions of coating film | | Evaluation of coating film | | |
|---|---|---|---|---|---|---|---|---|---|---|---|---|---|
| | Resin modifier | | | Mixing amount (parts by weight) | | | Organic solvent | Solid component (% by weight) | | | | | |
| | Kind | Anion moiety | Cation moiety | Resin modifier (active component) | DPHA 4) | Curing agent 3) | | | Temperature (°C) | Time (minute) | Antistatic properties (Ω) | Water resistance (Ω) | Transparency (%) |
| Comparative Example 1 | - | - | - | 0 | 95 | 5 | IPA 1) | 50 | 100 | 2 | >1.0E+16 | >1.0E+16 | 0.2 |
| Comparative Example 2 | 1k 5) | Chloride | 1-(acrylamidepropyl) trimethylammonium | 5 | 90 | 5 | IPA | 50 | 100 | 2 | 1.6E+15 | 1.0E+15 | 2.2 |
| Comparative Example 3 | 6) | Chloride | Diallyldimethylammonium | 5 | 90 | 5 | IPA | 50 | 100 | 2 | 5.0E+14 | 1.0E+15 | 1.2 |
| Comparative Example 4 | 1i | Poly(3) oxyethylene Lauryl ether sulfate | Triethanolamine | 5 | 90 | 5 | IPA | 50 | 100 | 2 | 1.3E+10 | >1.0E+16 | 1.4 |
| Comparative Example 5 | 1g | Perchloric acid | 1-(acrylamidepropyl) trimethylammonium | 5 | 90 | 5 | MeOH 2) | 50 | 100 | 2 | 2.5E+15 | 2.5E+15 | 1.3 |
| Comparative Example 6 | 1h | Methanesulfonic acid | 1-(acrylamidepropyl) trimethylammonium | 5 | 90 | 5 | MeOH | 50 | 100 | 2 | 1.6E+14 | 1.3E+14 | 4.0 |
| Comparative Example 7 | 1i | Methanesulfonic acid | Diallyldimethylammonium | 5 | 90 | 5 | IPA | 50 | 100 | 2 | 3.2E+14 | 7.9E+14 | 2.1 |

Note 1): In Table 5, poly(3)oxyethylene means that an average addition molar number of an ethylene oxide group is 3.
1) IPA: Isopropyl alcohol
2) MeOH: Methanol
3) Curing agent: Irgacure 184 (manufactured by Ciba Specialty Chemicals Inc.)
4) DPHA: Dipentaerythritol hexaacrylate
5) Reagent manufactured by Tokyo Chemical Industry Co., Ltd.
6) Reagent manufactured by Wako Pure Chemical Industries, Ltd.

[Table 6]

| | Coating composition | | | | | | | | | Drying conditions of coating film | | Contact angle (degree) |
|---|---|---|---|---|---|---|---|---|---|---|---|---|
| | Resin modifier | | | Mixing amount (parts by weight) | | | Organic solvent | Solid component (% by weight) | | | | |
| | Kind | Anion moiety | Cation moiety | Resin modifier (active component) | DPHA 4) | Curing agent 3) | | | | Temperature (°C) | Time (minute) | |
| Example 12 | 1a | Poly(3) oxyethylene lauryl ether sulfate | 1-(acrylamidepropyl) trimethylammonium | 20 | 75 | 5 | IPA 1) | 60 | | 70 | 1 | 27 |
| Example 13 | 1b | Poly(17) oxyethylene lauryl ether sulfate | 1-(acrylamidepropyl) trimethylammonium | 20 | 75 | 5 | IPA | 60 | | 70 | 1 | 24 |
| Example 14 | 1c | Poly(17) oxyethylene lauryl ether sulfate | Diallyldimethylammonium | 20 | 75 | 5 | IPA | 60 | | 70 | 1 | 23 |
| Comparative Example 8 | - | - | - | 0 | 95 | 5 | IPA | 60 | | 70 | 1 | 38 |
| Comparative Example 9 | 1h | Methanesulfonic acid | 1-(acrylamidepropyl) trimethylammonium | 20 | 75 | 5 | MeOH 2) | 60 | | 70 | 1 | 39 |
| Comparative Example 10 | 1i | Methanesulfonic acid | Diallyldimethylammonium | 20 | 75 | 5 | IPA | 60 | | 70 | 1 | 38 |

Note 2): In Table 6, poly(3)oxyethylene and poly(17)oxyethylene mean that average addition molar numbers of an ethylene oxide group are respectively 3 and 17.
1) IPA: Isopropyl alcohol
2) MeOH: Methanol
3) Curing agent: Irgacure 184 (manufactured by Ciba Specialty Chemicals Inc.)
4) DPHA: Dipentaerythritol hexaacrylate

[Table 7]

| | Coating composition | | | | | | | | | |
|---|---|---|---|---|---|---|---|---|---|---|
| | Resin modifier | | | Ionic liquid | Mixing amount (parts by weight) | | | | Organic solvent | Solid component (% by weight) |
| | Kind | Anion moiety | Cation moiety | | Resin modifier (Active component) | DPHA 5) | Ionic liquid | Curing agent 3) | | |
| Example 15 | 1a | Poly(3) oxyethylene lauryl ether sulfate | 1-(acrylamidepropyl) trimethylammonium | 1-ethyl-3-methylimidazolium ethyl sulfate 4) | 20 | 70 | 5 | 5 | IPA 1) | 60 |
| Example 16 | 1b | Poly(17) oxyethylene lauryl ether sulfate | 1-(acrylamidepropyl) trimethylammonium | 1-ethyl-3-methylimidazolium ethyl sulfate | 20 | 70 | 5 | 5 | IPA | 60 |
| Example 17 | 1f | Poly(23) oxyethylene oleyl ether sulfate | 1-(acrylamidepropyl) trimethylammonium | 1-ethyl-3-methylimidazolium ethyl sulfate | 10 | 80 | 5 | 5 | IPA | 60 |
| Example 18 | 1a | Poly(3) oxyethylene lauryl ether sulfate | 1-(acrylamidepropyl) trimethylammonium | 1-ethyl-3-methylimidazolium thiocyanate 4) | 20 | 70 | 5 | 5 | IPA | 50 |
| Example 19 | 1b | Poly(17) oxyethylene lauryl ether sulfate | 1-(acrylamidepropyl) trimethylammonium | 1-ethyl-3-methylimidazolium thiocyanate | 20 | 70 | 5 | 5 | IPA | 50 |
| Example 20 | 1c | Poly(17) oxyethylene lauryl ether sulfate | Diallyldimethylammonium | 1-ethyl-3-methylimidazolium chloride 4) | 10 | 80 | 5 | 5 | IPA | 50 |

(continued)

| | Coating composition | | | | | | | | | |
|---|---|---|---|---|---|---|---|---|---|---|
| | Resin modifier | | | Ionic liquid | Mixing amount (parts by weight) | | | | Organic solvent | Solid component (% by weight) |
| | Kind | Anion moiety | Cation moiety | | Resin modifier (Active component) | DPHA 5) | Ionic liquid | Curing agent 3) | | |
| Example 21 | 1d | Poly(50) oxyethylene lauryl ether sulfate | Diallyldimethylammonium | N-ethyl-3-methylpyridium ethyl sulfate 4) | 10 | 82 | 3 | 5 | IPA | 50 |
| Example 22 | 1e | Poly(3) oxyethylene lauryl ether sulfate | Allyldimethylamine | trihexyl(tetradecyl) phosphonium bis (trifluoromethylsulfonyl) imide 4) | 10 | 80 | 5 | 5 | IPA | 50 |
| Example 23 | 1a | Poly(3) oxyethylene lauryl ether sulfate | 1-(acrylamidepropyl) trimethylammonium | 1-ethyl-3-methylimidazolium bromide 4) | 20 | 72 | 3 | 5 | IPA | 50 |
| Example 24 | 1m | Poly(3) oxyethylene methyl ether sulfate | 1-(acrylamidepropyl) trimethylammonium | 1-ethyl-3-hydroxyethyl-imidazolium bromide | 20 | 70 | 5 | 5 | IPA | 60 |
| Example 25 | 1n | Poly(1) oxyethylene palmityl ether sulfate | Diallyldimethylammonium | 1-ethyl-3-methylimidazolium ethyl sulfate 4) | 10 | 80 | 5 | 5 | IPA | 50 |

Note 1): In Table 7, poly(1)oxyethylene, poly(3)oxyethylene, poly(17)oxyethylene, poly(23)oxyethylene and poly(50)oxyethylene mean that average addition molar numbers of an ethylene oxide group are respectively 1, 3, 17, 23 and 50.
1) IPA: Isopropyl alcohol
3) Curing agent: Irgacure 184 (manufactured by Ciba Specialty Chemicals Inc.)
4) Reagent manufactured by Merck & Co., Inc.
5) DPHA: Dipentaerythritol hexaacrylate

[Table 8]

| | Coating composition | | | | | | | | | |
|---|---|---|---|---|---|---|---|---|---|---|
| | Resin modifier | | | Ionic liquid | Mixing amount (parts by weight) | | | | Organic solvent | Solid component (% by weight) |
| | Kind | Anion moiety | Cation moiety | | Resin modifier (Active component) | DPHA 5) | Ionic liquid | Curing agent 3) | | |
| Comparative Example 11 | | - | - | - | 0 | 95 | 0 | 5 | IPA 1) | 50 |
| Comparative Example 12 | 1k | Chloride | 1-(acrylamidepropyl) trimethylammonium | 1-ethyl-3-methylimidazolium ethyl sulfate 4) | 20 | 70 | 5 | 5 | IPA | 50 |
| Comparative Example 13 | 11 | Chloride | Diallyldimethyl ammonium | 1-ethyl-3-methylimidazolium ethyl sulfate | 10 | 80 | 5 | 5 | IPA | 50 |
| Comparative Example 14 | 1j | Poly(3) oxyethylene lauryl ether sulfate | Triethanolamine | 1-ethyl-3-methylimidazolium thiocyanate 4) | 20 | 70 | 5 | 5 | IPA | 50 |
| Comparative Example 15 | 1g | Perchloric acid | 1-(acrylamidepropyl) trimethylammonium | 1-ethyl-3-hydroxyethyl imidazolium bromide | 20 | 70 | 5 | 5 | MeOH 2) | 50 |
| Comparative Example 16 | 1h | Methanesulfonic acid | 1-(acrylamidepropyl) trimethylammonium | 1-ethyl-3-methylimidazolium thiocyanate | 20 | 70 | 5 | 5 | MeOH | 50 |
| Comparative Example 17 | 1i | Methanesulfonic acid | Diallyldimethyl ammonium | 1-ethyl-3-methylimidazolium chloride 4) | 20 | 70 | 5 | 5 | IPA | 60 |

(continued)

| | Coating composition | | | | | | | | | | |
|---|---|---|---|---|---|---|---|---|---|---|---|
| | Resin modifier | | | Ionic liquid | Mixing amount (parts by weight) | | | | Organic solvent | Solid component (% by weight) |
| | Kind | Anion moiety | Cation moiety | | Resin modifier (Active component) | DPHA 5) | Ionic liquid | Curing agent 3) | | |
| Comparative Example 18 | - | - | - | 1-ethyl-3-methylimidazolium ethyl sulfate | 0 | 90 | 5 | 5 | IPA | 60 |

Note 1): In Table 8, poly(3)oxyethylene means that an average addition molar number of an ethylene oxide group is 3.
1) IPA: Isopropyl alcohol
2) MeOH: Methanol
3) Curing agent: Irgacure 184 (manufactured by Ciba Specialty Chemicals Inc.)
4) Reagent manufactured by Merck & Co., Inc.
5) DPHA: Dipentaerythritol hexaacrylate

[Table 9]

| | Drying conditions of coating film | | Evaluation of coating film | | | |
|---|---|---|---|---|---|---|
| | Temperature (°C) | Time (minute) | Antistatic properties (Ω) | Low-humidity antistatic properties (Ω) | Water resistance (Ω) | Transparency (%) |
| Example 15 | 70 | 1 | 3.5E+08 | 6.9E+09 | 1.0E+10 | 0.3 |
| Example 16 | 70 | 1 | 8.7E+08 | 7.6E+09 | 2.5E+10 | 0.2 |
| Example 17 | 70 | 1 | 3.6E+09 | 3.2E+10 | 6.2E+10 | 0.2 |
| Example 18 | 100 | 2 | 5.1E+08 | 8.3E+09 | 3.2E+11 | 0.2 |
| Example 19 | 100 | 2 | 1.3E+09 | 2.3E+10 | 7.9E+11 | 0.2 |
| Example 20 | 100 | 2 | 3.3E+09 | 8.0E+10 | 6.6E+11 | 0.2 |
| Example 21 | 100 | 2 | 7.8E+09 | 7.6E+10 | 2.3E+11 | 0.3 |
| Example 22 | 100 | 2 | 6.9E+09 | 1.3E+11 | 1.2E+11 | 0.2 |
| Example 23 | 100 | 2 | 6.9E+09 | 8.6E+10 | 4.6E+11 | 0.2 |
| Example 24 | 70 | 1 | 6.8E+08 | 6.9E+09 | 3.6E+10 | 0.2 |
| Example 25 | 70 | 1 | 3.2E+08 | 9.0E+09 | 9.5E+10 | 0.3 |

[Table 10]

| | Drying conditions of coating film | | Evaluation of coating film | | | |
|---|---|---|---|---|---|---|
| | Temperature (°C) | Time (minute) | Antistatic properties (Ω) | Low-humidity antistatic properties (Ω) | Water resistance (Ω) | Transparency (%) |
| Comparative Example 11 | 100 | 2 | >1.0E+16 | >1.0E+16 | >1.0E+16 | 0.2 |
| Comparative Example 12 | 100 | 2 | 1.3E+09 | 4.0E+14 | 1.0 E+15 | 2.2 |
| Comparative Example 13 | 100 | 2 | 6.9E+09 | 6.9E+14 | 1.0E+15 | 1.2 |
| Comparative Example 14 | 100 | 2 | 3.6E+09 | 4.0E+14 | >1.0E+16 | 1.4 |
| Comparative Example 15 | 100 | 2 | 8.3E+09 | 3.7E+13 | 2.5E+15 | 1.3 |
| Comparative Example 16 | 100 | 2 | 3.0E+09 | 6.0E+11 | 1.3E+14 | 4.9 |
| Comparative Example 17 | 70 | 1 | 2.9E+09 | 3.0E+11 | 1.6E+11 | 16.2 |
| Comparative Example 18 | 70 | 1 | >1.0E+16 | >1.0E+16 | >1.0E+16 | 0.2 |

[Table 11]

| | Coating composition | | | | | | | | | |
|---|---|---|---|---|---|---|---|---|---|---|
| | Resin modifier | | | Conductive polymer | Mixing amount (parts by weight) | | | | Organic solvent | Solid component (% by weight) |
| | Kind | Anion moiety | Cation moiety | | Resin modifier (Active component) | DPHA 4) | Conductive agent polymer | Curing agent 3) | | |
| Example 26 | 1o | Poly(2) oxyethylene decyl ether sulfate | 1-(acrylamidepropyl) trimethylammonium | PED-E60 5) | 20 | 74.5 | 0.5 | 5 | IPA 1) | 43 |
| Example 27 | 1o | Poly(2) oxyethylene decyl ether sulfate | 1-(acrylamidepropyl) trimethylammonium | PED-E60 | 5 | 87 | 3 | 5 | IPA | 30 |
| Example 28 | 1n | Poly(1) oxyethylene decyl ether sulfate | Diallyldimethyl ammonium | PED-E60 | 10 | 84 | 1 | 5 | IPA | 44 |
| Example 29 | 1o | Poly(2) oxyethylene decyl ether sulfate | 1-(acrylamidepropyl) trimethylammonium | PES-E10 6) | 10 | 83.5 | 1.5 | 5 | IPA | 40 |
| Example 30 | 1o | Poly(2) oxyethylene decyl ether sulfate | 1-(acrylamidepropyl) trimethylammonium | Panipol-T 7) | 5 | 89.5 | 0.5 | 5 | IPA | 38 |
| Comparative Example 19 | - | - | - | PED-E60 | 0 | 94 | 1 | 5 | IPA | 43 |

(continued)

| | Coating composition | | | | | | | | | |
|---|---|---|---|---|---|---|---|---|---|---|
| | Resin modifier | | | Conductive polymer | Mixing amount (parts by weight) | | | | Organic solvent | Solid component (% by weight) |
| | Kind | Anion moiety | Cation moiety | | Resin modifier (Active component) | DPHA 4) | Conductive agent polymer | Curing agent 3) | | |
| Comparative Example 20 | - | - | - | Panipol-T | 0 | 90 | 5 | 5 | IPA | 42 |

Note 1): In Table 11, poly(1)oxyethylene and poly(2)oxyethylene mean that average addition molar numbers of an alkylene oxide group are respectively 1 and 2.
1) IPA: Isopropyl alcohol
3) Curing agent: Irgacure 184 (manufactured by Ciba Specialty Chemicals Inc.)
4) DPHA: Dipentaerythritol hexaacrylate
5) PED-E60: Polythiophene manufactured by Polymerits Corp.Ltd.
6) PES-E10: Polypyrrol manufactured by Polymerits Corp.
7) Panipol-T: Polyaniline manufactured by PANIPOL Oy

[Table 12]

| | Drying conditions of coating film | | Evaluation of coating film | | | |
|---|---|---|---|---|---|---|
| | Temperature (°C) | Time (minute) | Antistatic properties (Ω) | Low-humidity antistatic properties (Ω) | Water resistance (Ω) | Transparency (%) |
| Example 26 | 70 | 1 | 9.0E+09 | 6.0E+10 | 2.2E+10 | 0.3 |
| Example 27 | 70 | 1 | 5.0E+09 | 1.0E+10 | 1.2E+10 | 0.4 |
| Example 28 | 70 | 1 | 6.6E+09 | 2.0E-10 | 9.0E+09 | 0.3 |
| Example 29 | 70 | 1 | 8.5E+09 | 3.8E+10 | 2.3E+10 | 0.5 |
| Example 30 | 70 | 1 | 2.5E+10 | 9.0E+10 | 7.8E+10 | 0.4 |
| Comparative Example 19 | 70 | 1 | 8.4E+15 | >1.0E+16 | >1.0E+16 | 0.4 |
| Comparative Example 20 | 70 | 1 | >1.0E+16 | >1.0E+16 | >1.0E+16 | 1.0 |

[Table 13]

| | Coating composition | | | | | | | | | Drying conditions of coating film | | Evaluation of coating film | | |
|---|---|---|---|---|---|---|---|---|---|---|---|---|---|---|
| | Resin modifier | | | Mixing amount (parts by weight) | | | Organic solvent | Solid component (% by weight) | | | | | | |
| | Kind | Anion moiety | Cation moiety | Resin modifier (active component) | DPHA 4) | Curing agent 3) | | | | Temperature (°C) | Time (minute) | Antistatic properties (Ω) | Water resistance (Ω) | Transparency (%) |
| Example 31 | 2a | Lauryl sulfate | 1-(acrylamidepropyl) trimethylammonium | 20 | 75 | 5 | IPA 1) | 60 | | 70 | 1 | 1.3E+10 | 2.0E+10 | 1.0 |
| Example 32 | 2a | Lauryl sulfate | 1-(acrylamidepropyl) trimethylammonium | 5 | 90 | 5 | IPA | 50 | | 100 | 2 | 3.2E+10 | 1.6E+10 | 0.2 |
| Example 33 | 2b | Myristyl sulfate | 1-(acrylamidepropyl) trimethylammonium | 5 | 90 | 5 | IPA | 50 | | 100 | 2 | 4.0E+10 | 5.0E+10 | 0.3 |
| Example 34 | 2c | Decyl sulfate | 1-(acrylamidepropyl) trimethylamonium | 20 | 75 | 5 | IPA | 60 | | 70 | 1 | 1.6E+09 | 5.0E+09 | 0.5 |
| Example 35 | 2c | Decyl sulfate | 1-(acrylamidepropyl) trimethylammonium | 3 | 92 | 5 | IPA | 50 | | 100 | 2 | 3.2E+10 | 2.0E+11 | 0.2 |
| Example 36 | 2e | Decyl sulfate | Diallyldimethyl ammonium | 5 | 90 | 5 | IPA | 50 | | 100 | 2 | 1.0E+11 | 4.0E+11 | 0.3 |
| Example 37 | 2d | 2-hexyldecyl sulfate | 1-(acrylamidepropyl) trimethylamonium | 5 | 90 | 5 | IPA | 50 | | 70 | 1 | 1.6E+10 | 1.3E+11 | 0.4 |
| Example 38 | 2f | Lauryl sulfate | Dimethylamine | 5 | 90 | 5 | IPA | 50 | | 100 | 2 | 1.6E+11 | 6.3E+11 | 0.3 |
| Example 39 | 2k | Octyl sulfate | 1-(acrylamidepropyl) trimethylammonium | 20 | 75 | 5 | IPA | 45 | | 70 | 1 | 1.6E+10 | 2.0E+10 | 0.2 |

(continued)

| | Coating composition | | | | | | | | | Drying conditions of coating film | | Evaluation of coating film | | |
|---|---|---|---|---|---|---|---|---|---|---|---|---|---|---|
| | Resin modifier | | | Mixing amount (parts by weight) | | | Organic solvent | Solid component (% by weight) | | | | | | |
| | Kind | Anion moiety | Cation moiety | Resin modifier (active component) | DPHA 4) | Curing agent 3) | | | | Temperature (°C) | Time (minute) | Antistatic properties (Ω) | Water resistance (Ω) | Transparency (%) |
| Example 40 | 21 | Palmityl sulfate | Diallyldimethyl ammonium | 10 | 85 | 5 | IPA | 45 | | 70 | 1 | 7.9E+10 | 3.2E+11 | 0.4 |

1) IPA: Isopropyl alcohol
3) Curing agent: Irgacure 184 (manufactured by Ciba Specialty Chemicals Inc.)
4) DPHA: Dipentaerythritol hexaacrylate

[Table 14]

| | Coating composition | | | | | | | | Drying conditions of coating film | | Evaluation of coating film | | |
|---|---|---|---|---|---|---|---|---|---|---|---|---|---|
| | Resin modifier | | | Mixing amount (parts by weight) | | | Organic solvent | Solid component (% by weight) | | | | | |
| | Kind | Anion moiety | Cation moiety | Resin modifier (active component) | DPHA 4) | Curing agent 3) | | | Temperature (°C) | Time (minute) | Antistatic properties (Ω) | Water resistance (Ω) | Transparency (%) |
| Comparative Example 21 | - | - | - | 0 | 95 | 5 | IPA 1) | 50 | 100 | 2 | >1.0E+16 | >1.0E+16 | 0.2 |
| Comparative Example 22 | 2g | Lauryl sulfate | Triethanolamine | 20 | 75 | 5 | IPA | 60 | 70 | 1 | 1.0E+10 | 1.0E+14 | 13.5 |
| Comparative Example 23 | 2h | Paratoluenesulfonic acid | 1-(acrylamidepropyl) trimethylammonium | 20 | 75 | 5 | IPA | 60 | 70 | 1 | 6.3E+11 | 3.2E+12 | 3.0 |
| Comparative Example 24 | 2i | Methanesulfonic acid | 1-(acrylamidepropyl) trimethylamonium | 20 | 75 | 5 | MeOH 2) | 60 | 70 | 1 | 6.3E+12 | 6.3E+13 | 9.2 |
| Camparative Example 25 | 2i | Methanesulfonic acid | 1-(acrylamidepropyl) trimethylammonium | 5 | 90 | 5 | MeOH | 50 | 100 | 2 | 1.6E+14 | 1.3E+14 | 4.0 |
| Comparative Example 26 | 2j | Methanesulfonic acid | Diallyldimethylammoniu m | 20 | 75 | 5 | IPA | 60 | 70 | 1 | 1.6E+10 | 1.6E+11 | 15.0 |

1) IPA: Isopropyl alcohol
2) MeOH: Methanol
3) Curing agent: Irgacure 184 (manufactured by Ciba Specialty Chemicals Inc.)
4) DPHA: Dipentaerythritol hexaacrylate

[Table 15]

| | Coating composition | | | | | | | | | Drying conditions of coating film | | Contact angle (degree) |
|---|---|---|---|---|---|---|---|---|---|---|---|---|
| | Resin modifier | | | Mixing amount (parts by weight) | | | Organic solvent | Solid component (% by weight) | | | | |
| | Kind | Anion moiety | Cation moiety | Resin modifier (active component) | DPHA 4) | Curing agent 3) | | | | Temperature (°C) | Time (minute) | |
| Example 41 | 2a | Lauryl sulfate | 1-(acrylamidepropyl) trimethylammonium | 20 | 75 | 5 | IPA 1) | 60 | | 70 | 1 | 27 |
| Example 42 | 2b | Myristyl sulfate | 1-(acrylamidepropyl) trimethylammonium | 20 | 75 | 5 | IPA | 60 | | 70 | 1 | 27 |
| Example 43 | 2e | Decyl sulfate | Diallyldimethylammonium | 20 | 75 | 5 | IPA | 60 | | 70 | 1 | 23 |
| Comparative Example 27 | - | - | - | 0 | 95 | 5 | IPA | 60 | | 70 | 1 | 38 |
| Comparative Example 28 | 2i | Methanesulfonic acid | 1-(acrylamidepropyl) trimethylammonium | 20 | 75 | 5 | IPA | 60 | | 70 | 1 | 39 |
| Comparative Example 29 | 2h | Paratoluenesulfonic acid | 1-(acrylamidepropyl) trimethylammonium | 20 | 75 | 5 | TPA | 60 | | 70 | 1 | 38 |

1) IPA: Isopropyl alcohol
3) Curing agent: Irgacure 184 (manufactured by Ciba Specialty Chemicals Inc.)
4) DPHA: Dipentaerythritol hexaacrylate

[Table 16]

| | Coating composition | | | | | | | | | |
|---|---|---|---|---|---|---|---|---|---|---|
| | Resin modifier | | | Ionic liquid | Mixing amount (parts by weight) | | | | Organic solvent | Solid component weight) |
| | Kind | Anion moiety | Cation moiety | | Resin modifier (Active component) | DPHA 5) | Ionic liquid | Curing agent 3) | | |
| Example 44 | 2a | Lauryl sulfate | 1-(acrylamidepropyl) trimethylammonium | 1-ethyl-3-methylimidazolium ethyl sulfate 4) | 20 | 70 | 5 | 5 | IPA 1) | 60 |
| Example 45 | 2a | Lauryl sulfate | 1-(acrylamidepropyl) trimethylammonium | 1-ethyl-3-methylimidazolium ethyl sulfate | 10 | 80 | 5 | 5 | IPA | 50 |
| Example 46 | 2b | Myristyl sulfate | 1-(acrylamidepropyl) trimethylammonium | 1-ethyl-3-hydroxyethylimidazolium bromide | 10 | 80 | 5 | 5 | IPA | 50 |
| Example 47 | 2c | Decyl sulfate | 1-(acrylamidepropyl) trimethylammonium | 1-ethyl-3-methylimidazolium thiocyanate 4) | 20 | 70 | 5 | 5 | IPA | 60 |
| Example 48 | 2c | Decyl sulfate | 1-(acrylamidepropyl) trimethylammonium | 1-ethyl-3-methylimidazolium thiocyanate | 10 | 82 | 3 | 5 | IPA | 50 |
| Example 49 | 2e | Decyl sulfate | Diallyldimethyl ammonium | 1-ethyl-3-methylimidazolium chloride 4) | 20 | 70 | 5 | 5 | IPA | 50 |
| Example 50 | 2d | 2-hexyldecyl sulfate | 1-(acrylamidepropyl) trimethylammonium | N-ethyl-3-methylpyridium ethyl sulfate 4) | 20 | 70 | 5 | 5 | IPA | 50 |
| Example 51 | 2f | Lauryl sulfate | Dimethylallylamine | Trihexyl(tetradecyl) phosphonium bis (trifluoromethylsulfonyl) imide 4) | 20 | 70 | 5 | 5 | IPA | 50 |

(continued)

| | Coating composition | | | | | | | | | |
|---|---|---|---|---|---|---|---|---|---|---|
| | Resin modifier | | | Ionic liquid | Mixing amount (parts by weight) | | | | Organic solvent | Solid component weight) |
| | Kind | Anion moiety | Cation moiety | | Resin modifier (Active component) | DPHA 5) | Ionic liquid | Curing agent 3) | | |
| Example 52 | 2k | Octyl sulfate | 1-(acrylamidepropyl) trimethylammonium | 1-ethyl-3-methyl imidazolium bromide | 20 | 70 | 5 | 5 | IPA | 45 |
| Example 53 | 21 | Palmityl sulfate | Diallyldimethyl ammonium | 1-ethyl-3-methyl imidazolium ethyl sulfate | 10 | 80 | 5 | 5 | IPA | 45 |

1) IPA: Isopropyl alcohol
3) Curing agent: Irgacure 184 (manufactured by Ciba Specialty Chemicals Inc.)
4) Reagent manufactured by Merck & Co., Inc.
5) DPHA: Dipentaerythritol hexaacrylate

[Table 17]

| | Coating composition | | | | | | | | | |
|---|---|---|---|---|---|---|---|---|---|---|
| | Resin modifier | | | Ionic liquid | Mixing amount (parts by weight) | | | | Organic solvent | Solid component (% by weight) |
| | Kind | Anion moiety | Cation moiety | | Resin modifier (Active component) | DPHA 5) | Ionic liquid | Curing agent 3) | | |
| Comparative Example 30 | - | - | - | - | 0 | 95 | 0 | 5 | IPA 1) | 50 |
| Comparative Example 31 | 2g | Lauryl sulfate | Triethanolamine | 1-ethyl-3-methylimidazolium ethyl sulfate 4) | 20 | 70 | 5 | 5 | IPA | 60 |
| Comparative Example 32 | 2h | Paratoluenesulfonic acid | 1-(acrylamidepropyl) trimethylammonium | 1-ethyl-3-hydroxyethyl imidazolium bromide | 20 | 70 | 5 | 5 | IPA | 60 |
| Comparative Example 33 | 2i | Methanesulfonic acid | 1-(acrylamidepropyl) trimethylammonium | 1-ethyl-3-methylimidazolium thiocyanate 4) | 10 | 82 | 3 | 5 | MeOH 2) | 60 |
| Comparative Example 34 | 2i | Methanesulfonic acid | 1-(acrylamidepropyl) trimethylamonium | 1-ethyl-3-methylimidazolium thiocyanate | 20 | 70 | 5 | 5 | MeOH | 50 |
| Comparative Example 35 | 2j | Methanesulfonic acid | Diallyldimethyl ammonium | 1-ethyl-3-methylimidazolium chloride 4) | 20 | 70 | 5 | 5 | IPA | 60 |

(continued)

| | Coating composition | | | | | | | | | |
|---|---|---|---|---|---|---|---|---|---|---|
| | Resin modifier | | | Ionic liquid | Mixing amount (parts by weight) | | | | Organic solvent | Solid component (% by weight) |
| | Kind | Anion moiety | Cation moiety | | Resin modifier (Active component) | DPHA 5) | Ionic liquid | Curing agent 3) | | |
| Comparative Example 36 | - | - | - | 1-ethyl-3-methylimidazolium ethyl sulfate | 0 | 90 | 5 | 5 | IPA | 60 |

1) IPA: Isopropyl alcohol
2) MeOH: Methanol
3) Curing agent: Irgacure 184 (manufactured by Ciba Specialty Chemicals Inc.)
4) Reagent manufactured by Merck & Co., Inc.
5) DPHA: Dipentaerythritol hexaacrylate

[Table 18]

| | Drying conditions of coating film | | Evaluation of coating film | | | |
|---|---|---|---|---|---|---|
| | Temperature (°C) | Time (minute) | Antistatic properties (Ω) | Low-humidity antistatic properties (Ω) | Water resistance (Ω) | Transparency (%) |
| Example 44 | 70 | 1 | 2.1E+08 | 1.2E+10 | 1.6E+10 | 0.3 |
| Example 45 | 70 | 1 | 6.9E+08 | 3.3E+10 | 4.0E+10 | 0.2 |
| Example 46 | 70 | 1 | 3.2E+08 | 6.3E+10 | 7.9E+10 | 0.4 |
| Example 47 | 70 | 1 | 1.5E+08 | 8.6E+09 | 6.3E+09 | 0.3 |
| Example 48 | 70 | 1 | 6.3E+08 | 1.9E+10 | 2.0E+10 | 0.2 |
| Example 49 | 100 | 2 | 1.9E+09 | 8.9E+10 | 1.6E+11 | 0.3 |
| Example 50 | 70 | 1 | 2.1E+09 | 1.3E+11 | 2.5E+11 | 0.3 |
| Example 51 | 100 | 2 | 3.6E+09 | 2.3E+11 | 4.0E+11 | 0.3 |
| Example 52 | 70 | 1 | 2.1E+09 | 9.8E+10 | 5.0E+10 | 0.2 |
| Example 53 | 70 | 1 | 6.3E+09 | 4.0E+10 | 7.9E+10 | 0.3 |

[Table 19]

| | Drying conditions of coating film | | Evaluation of coating film | | | |
|---|---|---|---|---|---|---|
| | Temperature (°C) | Time (minute) | Antistatic properties (Ω) | Low-humidity antistatic properties (Ω) | Water resistance (Ω) | Transparency (%) |
| Comparative Example 30 | 100 | 2 | >1.0E+16 | >1.0E+16 | >1.0E+16 | 0.2 |
| Comparative Example 31 | 70 | 1 | 6.7E+09 | 1.0E+13 | >1.0E+16 | 13.6 |
| Comparative Example 32 | 70 | 1 | 3.2E+09 | 8.3E+10 | 3.2E+12 | 3.2 |
| Comparative Example 33 | 70 | 1 | 4.5E+09 | 2.3E+11 | 6.3E+13 | 10.2 |
| Comparative Example 34 | 100 | 2 | 3.0E+09 | 6.0E+11 | 1.3E+14 | 4.9 |
| Comparative Example 35 | 70 | 1 | 2.9E+09 | 3.0E+11 | 1.6E+11 | 16.2 |
| Comparative Example 36 | 70 | 1 | >1.0E+16 | >1.0E+16 | >1.0E+16 | 0.2 |

[Table 20]

| | Coating composition | | | | | | | | | |
|---|---|---|---|---|---|---|---|---|---|---|
| | Resin modifier | | | Conductive polymer | Mixing amount (parts by weight) | | | | Organic solvent | Solid component (% by weight) |
| | Kind | Anion moiety | Cation moiety | | Resin modifier (Active component) | DPHA 3) | Conductive polymer | Curing agent 2) | | |
| Example 54 | 21 | Palmityl sulfate | Diallyldimethylammonium | PED-E60 4) | 10 | 84 | 1 | 5 | IPA 1) | 44 |
| Example 55 | 2c | Decyl sulfate | 1-(acrylamidepropyl) trimethylammonium | Panipol-T 5) | 10 | 89.5 | 0.5 | 5 | IPA | 37 |
| Comparative Example 37 | - | - | - | PED-E60 | 0 | 94 | 1 | 5 | IPA | 43 |
| Comparative Example 38 | - | - | - | PED-E60 | 0 | 90 | 5 | 5 | IPA | 29 |
| Comparative Example 39 | - | - | - | Panipol -T | 0 | 90 | 5 | 5 | IPA | 42 |

1) IPA: Isopropyl alcohol
2) Curing agent: Irgacure 184 (manufactured by Ciba Specialty Chemicals Inc.)
3) DPHA: Dipentaerythritol hexaacrylate
4) PED-E60: Polythiophene manufactured by Polymerits Corp.
5) Panipol-T: Polyaniline manufactured by PANIPOL Oy

[Table 21]

| | Drying conditions of coating film | | Evaluation of coating film | | | |
|---|---|---|---|---|---|---|
| | Temperature (°C) | Time (minute) | Antistatic properties (Ω) | Low-humidity antistatic properties (Q) | Water resistance (Ω) | Transparency (%) |
| Example 54 | 70 | 1 | 9.1E+09 | 8.0E+10 | 1.0E+11 | 0.4 |
| Example 55 | 70 | 1 | 3.0E+10 | 1.0E+11 | 8.0E+10 | 0.5 |
| Comparative Example 37 | 70 | 1 | 8.4E+15 | >1.0E+16 | >1.0E+16 | 0.4 |
| Comparative Example 38 | 70 | 1 | 3.4E+11 | 1.9E+12 | 3.2E+12 | 1.0 |
| Comparative Example 39 | 70 | 1 | >1.0E+16 | >1.0E+16 | >1.0E+16 | 1.0 |

[Table 22]

| | Coating composition | | | | | | | | Drying conditions of coating film | | Evaluation of coating film | | |
|---|---|---|---|---|---|---|---|---|---|---|---|---|---|
| | Resin modifier | | | Mixing amount (parts by weight) | | | Organic solvent | Solid component (% by weight) | | | | | |
| | Kind | Anion moiety | Cation moiety | Resin modifier (active component) | DPHA 4) | Curing agent 3) | | | Temperature (°C) | Time (minute) | Antistatic properties (Ω) | Water resistance (log Ω) | Transparency (%) |
| Example 56 | 3a | Decane sulfonate | 1-(acrylamidepropyl) trimethylammonium | 20 | 75 | 5 | IPA 1) | 60 | 70 | 1 | 1.3E+09 | 1.6E+09 | 0.1 |
| Example 57 | 3a | Decane sulfonate | 1-(acrylamidepropyl) trimethylammonium | 10 | 85 | 5 | IPA | 60 | 70 | 1 | 4.0E+09 | 1.3E+09 | 0.2 |
| Example 58 | 3a | Decane sulfonate | 1-(acrylamidepropyl) trimethylammonium | 5 | 90 | 5 | IPA | 60 | 70 | 1 | 2.5E+10 | 1.6E+11 | 0.2 |
| Example 59 | 3a | Decane sulfonate | 1-(acrylamidepropyl) trimethylammonium | 3 | 92 | 5 | IPA | 60 | 70 | 1 | 2.0E+11 | 6.3E+11 | 0.2 |
| Example 60 | 3b | Pentadecane sulfonate | 1-(acrylamidepropyl) trimethylammonium | 20 | 75 | 5 | IPA | 60 | 70 | 1 | 1.3E+10 | 2.0E+10 | 0.2 |
| Example 61 | 3b | Pentadecane sulfonate | 1-(acrylamidepropyl) trimethylammonium | 5 | 90 | 5 | IPA | 60 | 70 | 1 | 1.6E+10 | 1.0E+11 | 0.2 |
| Example 62 | 3c | Decane sulfonate | Diallyldimethyl ammonium | 20 | 75 | 5 | IPA | 60 | 70 | 1 | 2.0E+09 | 2.5E+09 | 0.2 |

1) IPA: Isopropyl alcohol
3) Curing agent: Irgacure 184 (manufactured by Ciba Specialty Chemicals Inc.)
4) DPHA: Dipentaerythritol hexaacrylate

[Table 23]

| | Coating composition | | | | | | | | Drying conditions of coating film | | Evaluation of coating film | | |
|---|---|---|---|---|---|---|---|---|---|---|---|---|---|
| | Resin modifier | | | Mixing amount (parts by weight) | | | Organic solvent | Solid component (% by weight) | | | | | |
| | Kind | Anion moiety | Cation moiety | Resin modifier (active component) | DPHA 4) | Curing agent 3) | | | Temperature (°C) | Time (minute) | Antistatic properties (Ω) | Water resistance (log Ω) | Transparency (%) |
| Comparative Example 40 | - | - | - | 0 | 95 | 5 | IPA 1) | 50 | 70 | 1 | >1.0E+16 | >1.0E+16 | 0.2 |
| Comparative Example 41 | 3d | Paratoluenesulfonic acid | 1-(acrylamidepropyl) trimethylammonium | 20 | 75 | 5 | IPA | 60 | 70 | 1 | 6.3E+11 | 3.2E+12 | 3.0 |
| Comparative Example 42 | 3e | Methanesulfonic acid | 1-(acrylamidepropyl) trimethylammonium | 20 | 75 | 5 | MeOH 2) | 60 | 70 | 1 | 6.3E+12 | 6.3E+13 | 9.2 |
| Comparative Example 43 | 3e | Methanesulfonic acid | 1-(acrylamidepropyl) trimethyl ammonium | 5 | 90 | 5 | MeOH | 50 | 70 | 1 | 3.2E+14 | 4.0E+14 | 7.0 |
| Comparative Example 44 | 3f | Methanesulfonic acid | Diallyldimethyl ammonium | 20 | 75 | 5 | IPA | 60 | 70 | 1 | 1.6E+10 | 1.6E+11 | 15.0 |

1) IPA: Isopropyl alcohol
2) MeOH: Methanol
3) Curing agent: Irgacure 184 (manufactured by Ciba Specialty Chemicals Inc.)
4) DPHA: Dipentaerythritol hexaacrylate

[Table 24]

| | Coating composition | | | | | | | | Drying conditions of coating film | | Contact angle |
|---|---|---|---|---|---|---|---|---|---|---|---|
| | Resin modifier solution | | | Mixing amount (parts by weight) | | | Organic solvent | Solid component (% by weight) | | | |
| | Kind | Anion moiety | Cation moiety | Resin modifier (active component) | DPHA 4) | Curing agent 3) | | | Temperature (°C) | Time (minute) | (degree) |
| Example 63 | 3a | Decane sulfonate | 1-(acrylamidepropyl) trimethylammonium | 20 | 75 | 5 | IPA 1) | 60 | 70 | 1 | 24 |
| Example 64 | 3b | Pentadecane sulfonate | 1-(acrylamidepropyl) trimethylammonium | 20 | 75 | 5 | IPA | 60 | 70 | 1 | 22 |
| Example 65 | 3c | Decane sulfonate | Diallyldimethyl ammonium | 20 | 75 | 5 | IPA | 60 | 70 | 1 | 29 |
| Comparative Example 45 | - | - | - | 0 | 95 | 5 | IPA | 60 | 70 | 1 | 38 |
| Comparative Example 46 | 3e | Methanesulfonic acid | 1-(acrylamidepropyl) trimethylammonium | 20 | 75 | 5 | IPA | 60 | 70 | 1 | 39 |
| Comparative Example 47 | 3d | Paratoluenesulfo nic acid | 1-(acrylamidepropyl) trimethylammonium | 20 | 75 | 5 | IPA | 60 | 70 | 1 | 38 |

1) IPA: Isopropyl alcohol
3) Curing agent: Irgacure 184 (manufactured by Ciba Specialty Chemicals Inc.)
4) DPHA: Dipentaerythritol hexaacrylate

[Table 25]

| | Coating composition | | | | | | | | | |
|---|---|---|---|---|---|---|---|---|---|---|
| | Resin modifier | | | Ionic liquid | Mixing amount (parts by weight) | | | | Organic solvent | Solid component (% by weight) |
| | Kind | Anion moiety | Cation moiety | | Resin modifier (Active component) | DPHA 5) | Ionic liquid | Curing agent 3) | | |
| Example 66 | 3a | Decane sulfonate | 1-(acrylamidepropyl) trimethylammonium | 1-ethyl-3-methylimidazolium ethyl sulfate 4) | 20 | 70 | 5 | 5 | IPA 1) | 60 |
| Example 67 | 3a | Decane sulfonate | 1-(acrylamidepropyl) trimethylammonium | 1-ethyl-3-methylimidazolium ethyl sulfate | 10 | 80 | 5 | 5 | IPA | 60 |
| Example 68 | 3a | Decane sulfonate | 1-(acrylamidepropyl) trimethylammonium | 1-ethyl-3-methylimidazolium thiocyanate 4) | 5 | 85 | 5 | 5 | IPA | 60 |
| Example 69 | 3a | Decane sulfonate | 1-(acrylamidepropyl) trimethylammonium | 1-ethyl-3-methylimidazolium thiocyanate | 3 | 89 | 3 | 5 | IPA | 60 |
| Example 70 | 3b | Pentadecane sulfonate | 1-(acrylamidepropyl) trimethylammonium | N-ethyl-3-methylpyridium ethyl sulfate 4) | 20 | 70 | 5 | 5 | IPA | 60 |
| Example 71 | 3b | Pentadecane sulfonate | 1-(acrylamidepropyl) trimethylammonium | 1-ethyl-3-methylimidazolium chloride 4) | 5 | 85 | 5 | 5 | IPA | 60 |

(continued)

| | Coating composition | | | | | | | | | |
|---|---|---|---|---|---|---|---|---|---|---|
| | Resin modifier | | | Ionic liquid | Mixing amount (parts by weight) | | | | Organic solvent | Solid component (% by weight) |
| | Kind | Anion moiety | Cation moiety | | Resin modifier (Active component) | DPHA 5) | Ionic liquid | Curing agent 3) | | |
| Example 72 | 3c | Decane sulfonate | Diallyldimethylammonium | 1-ethyl-3-hydroxyethyl imidazolium bromide | 20 | 72 | 3 | 5 | IPA | 60 |

1) IPA: Isopropyl alcohol
3) Curing agent: Irgacure 184 (manufactured by Ciba Specialty Chemicals Inc.)
4) Reagent manufactured by Merck & Co., Inc.
5) DPHA: Dipentaerythritol hexaacrylate

[Table 26]

| | Coating composition | | | | | | | | | |
|---|---|---|---|---|---|---|---|---|---|---|
| | Resin modifier | | | Ionic liquid | Mixing amount (parts by weight) | | | | Organic solvent | Solid component (% by weight) |
| | Kind | Anion moiety | Cation moiety | | Resin modifier (Active component) | DPHA 5) | Ionic liquid | Curing agent 3) | | |
| Comparative Example 48 | - | - | - | - | 0 | 95 | 0 | 5 | IPA 1) | 50 |
| Comparative Example 49 | 3d | Paratoluenesulfonic acid | 1-(acrylamidepropyl) trimethylammonium | 1-ethyl-3-methylimidazolium ethyl sulfate 4) | 20 | 70 | 5 | 5 | IPA | 60 |
| Comparative Example 50 | 3e | Methanesulfonic acid | 1-(acrylamidepropyl) trimethylammonium | 1-ethyl-3-methylimidazolium ethyl sulfate | 10 | 80 | 5 | 5 | MeOH 2) | 50 |
| Comparative Example 51 | 3e | Methanesulfonic acid | 1-(acrylamidepropyl) trimethylammonium | 1-ethyl-3-methylimidazolium thiocyanate 4) | 20 | 70 | 5 | 5 | MeOH | 50 |
| Comparative Example 52 | 3f | Methanesulfonic acid | Diallyldimethyl ammonium | 1-ethyl-3-methylimidazolium chloride 4) | 20 | 70 | 5 | 5 | IPA | 60 |
| Comparative Example 53 | - | - | - | 1-ethyl-3-methylimidazolium ethyl sulfate | 0 | 90 | 5 | 5 | IPA | 60 |

1) IPA: Isopropyl alcohol
2) MeOH: Methanol
3) Curing agent: Irgacure 184 (manufactured by Ciba Specialty Chemicals Inc.)
4) Reagent manufactured by Merck & Co., Inc.
5) DPHA: Dipentaerythritol hexaacrylate

[Table 27]

| | Drying conditions of coating film | | Evaluation of coating film | | | |
|---|---|---|---|---|---|---|
| | Temperature (°C) | Time (minute) | Antistatic properties (Ω) | Low-humidity antistatic properties (Ω) | Water resistance (log Ω) | Transparency (%) |
| Example 66 | 70 | 1 | 4.5E+08 | 9.7E+09 | 1.6E+09 | 0.2 |
| Example 67 | 70 | 1 | 6.8E+08 | 1.3E+10 | 1.3E+09 | 0.2 |
| Example 68 | 70 | 1 | 2.0E+09 | 5.4E+10 | 1.6E+11 | 0.2 |
| Example 69 | 70 | 1 | 1.6E+10 | 1.3E+11 | 6.3E+11 | 0.2 |
| Example 70 | 70 | 1 | 1.0E+09 | 2.3E+10 | 2.0E+10 | 0.2 |
| Example 71 | 70 | 1 | 9.7E+09 | 6.8E+10 | 1.0E+11 | 0.2 |
| Example 72 | 70 | 1 | 2.2E+09 | 3.7E+10 | 2.5E+09 | 0.2 |

[Table 28]

| | Drying conditions of coating film | | Evaluation of coating film | | | |
|---|---|---|---|---|---|---|
| | Temperature (°C) | Time (minute) | Antistatic properties (Ω) | Low-humidity antistatic properties (Ω) | Water resistance (log Ω) | Transparency (%) |
| Comparative Example 48 | 70 | 1 | >1.0E+16 | >1.0E+16 | >1.0E+16 | 0.2 |
| Comparative Example 49 | 70 | 1 | 6.0E+09 | 3.0E+10 | 3.2E+12 | 3.0 |
| Comparative Example 50 | 100 | 2 | 3.0E+09 | 6.0E+11 | 1.3E-14 | 4.9 |
| Comparative Example 51 | 100 | 2 | 3.0E+09 | 6.0E+11 | 1.3E+14 | 4.9 |
| Comparative Example 52 | 70 | 1 | 2.9E+09 | 3.0E+11 | 1.6E+11 | 16.2 |
| Comparative Example 53 | 70 | 1 | >1.0E+16 | >1.0E+16 | >1.0E+16 | 0.2 |

[Table 29]

| | Coating composition | | | | | | | | | |
|---|---|---|---|---|---|---|---|---|---|---|
| | Resin modifier | | | Conductive polymer | Mixing amount (parts by weight) | | | | Organic solvent | Solid component (% by weight) |
| | Kind | Anion moiety | Cation moiety | | Resin modifier (Active component) | DPHA 3) | Conductive polymer | Curing agent 2) | | |
| Example 73 | 3a | Decane sulfonate | 1-(acrylamidepropyl) trimethylammonium | PED-E60 4) | 10 | 84 | 1 | 5 | IPA 1) | 42 |
| Comparative Example 54 | - | - | - | PED-E60 | 0 | 94 | 1 | 5 | IPA | 43 |
| Comparative Example 55 | - | - | - | PED-E60 | 0 | 90 | 5 | 5 | IPA | 29 |

1) IPA: Isopropyl alcohol
2) Curing agent: Irgacure 184 (manufactured by Ciba Specialty Chemicals Inc.)
3) DPHA: Dipentaerythritol hexaacrylate
4) PED-E60: Polythiophene manufactured by Polymerits Corp.

[Table 30]

| | Drying conditions of coating film | | Evaluation of coating film | | | |
|---|---|---|---|---|---|---|
| | Temperature (°C) | Time (minute) | Antistatic properties (Ω) | Low-humidity antistatic properties (Ω) | Water resistance (Ω) | Transparency (%) |
| Example 73 | 70 | 1 | 8.0E+09 | 9.0E+10 | 1.1E+11 | 0.4 |
| Comparative Example 54 | 70 | 1 | 8.4E+15 | >1.0E+16 | >1.0E+16 | 0.4 |
| Comparative Example 55 | 70 | 1 | 3.4E+11 | 1.9E+12 | 3.2E+12 | 1.0 |

## Claims

1. A resin modifier represented by any one of the following formulas (Ia), (Ib) and (Ic):

$$R^{31}\text{-O-AO}_n\text{-SO}_3^-B^+ \qquad \text{(Ia)}$$

wherein $R^{31}$ represents a hydrocarbon group having 1 to 22 carbon atoms, AO represents an alkylene oxide group having 2 to 4 carbon atoms, n represents an average addition molar number of AO and is a positive number of 100 or less, and $B^+$ represents an ammonium ion (C) having a polymerizable unsaturated group;

$$R^{32}\text{-OSO}_3^-B^+ \qquad \text{(Ib)}$$

wherein $R^{32}$ represents a hydrocarbon group having 6 to 22 carbon atoms, and B+ represents an ammonium ion (C) having a polymerizable unsaturated group;

$$R^{33}\text{-SO}_3^-B^+ \qquad \text{(Ic)}$$

wherein $R^{33}$ represents a hydrocarbon group having 8 to 22 carbon atoms, and B+ represents ammonium ion (c) having a polymerizable unsaturated group.

2. The resin modifier according to claim 1, which has active energy curability.

3. The resin modifier according to claim 1 or 2, wherein the ammonium ion (C) is represented by the following formula (II) or the following formula (III):

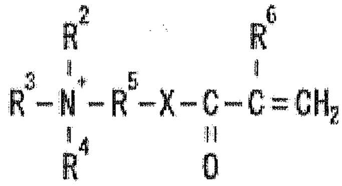

(II)

wherein $R^2$, $R^3$, $R^4$ each independently represents a hydrogen atom or a hydrocarbon group having 1 to 8 carbon atoms, $R^5$ represents an alkylene group having 2 to 5 carbon atoms, $R^6$ represents a hydrogen atom or a methyl group, and X represents O or NH; and

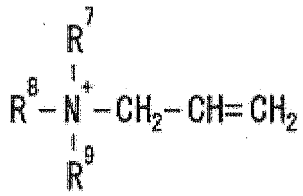

(III)

wherein $R^7$ and $R^8$ each independently represents a hydrogen atom or a hydrocarbon group having 1 to 8 carbon atoms, and $R^9$ represents a hydrocarbon group having 1 to 8 carbon atoms.

**4.** The resin modifier according to any one of claims 1 to 3, which is an antistatic agent.

**5.** A coating composition comprising the resin modifier according to any one of claims 1 to 4, and an organic solvent.

**6.** The coating composition according to claim 5, which further contains a resin or resin monomer capable of reacting by irradiation with active energy rays.

**7.** The coating composition according to claim 5 or 6, which further contains an ionic liquid.

**8.** The coating composition according to any one of claims 5 to 7, which further contains a conductive polymer.

**9.** A method for producing a coating film, which comprises coating the coating composition according to any one of claims 5 to 8 on a base material, and then irradiating the coating composition with active energy rays to form a coating film on the base material.

**10.** A coating film obtained by the production method according to claim 9.

**11.** A coating film comprising structures represented by any one of the following formulas (IVa), (IVb), (IVc), (Va), (Vb) and (Vc) in at least one portion:

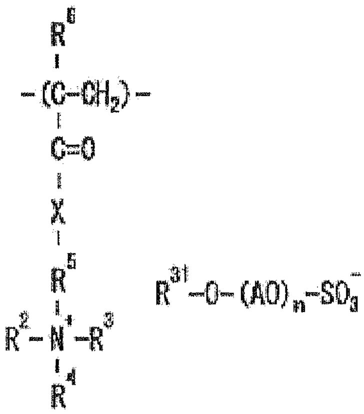

(IVa)

wherein $R^{31}$ represents a hydrocarbon group having 1 to 22 carbon atoms, AO represents an alkylene oxide group having 2 to 4 carbon atoms, n is an average addition molar number of AO and is a positive number of 100 or less, $R^2$, $R^3$ and $R^4$ each independently represents a hydrogen atom or a hydrocarbon group having 1 to 8 carbon atoms, $R^5$ represents an alkylene group having 2 to 5 carbon atoms, $R^6$ represents a hydrogen atom or a methyl group, and X represents O or NH;

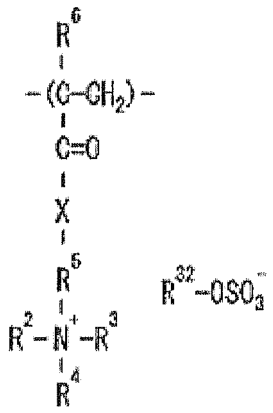

(IVb)

wherein $R^{32}$ represents a hydrocarbon group having 6 to 22 carbon atoms, $R^2$, $R^3$ and $R^4$ each independently represents a hydrogen atom or a hydrocarbon group having 1 to 8 carbon atoms, $R^5$ represents an alkylene group having 2 to 5 carbon atoms, $R^6$ represents a hydrogen atom or a methyl group, and X represents O or NH;

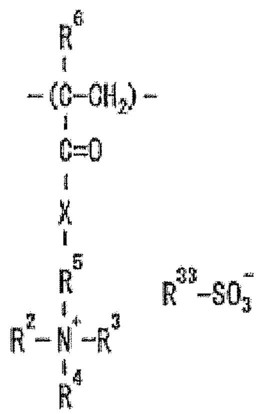

(IVc)

wherein $R^{33}$ represents a hydrocarbon group having 8 to 22 carbon atoms, $R^2$, $R^3$ and $R^4$ each independently represents a hydrogen atom or a hydrocarbon group having 1 to 8 carbon atoms, $R^5$ represents an alkylene group having 2 to 5 carbon atoms, $R^6$ represents a hydrogen atom or a methyl group, and X represents O or NH;

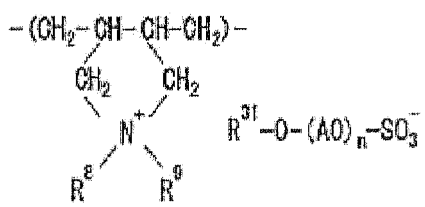

(Va)

wherein $R^{31}$ represents a hydrocarbon group having 1 to 22 carbon atoms, AO represents an alkylene oxide group having 2 to 4 carbon atoms, n represents an average addition molar number of AO and is a positive number of 100 or less, $R^8$ represents a hydrogen atom or a hydrocarbon group having 1 to 8 carbon atoms, and $R^9$ represents a hydrocarbon group having 1 to 8 carbon atoms;

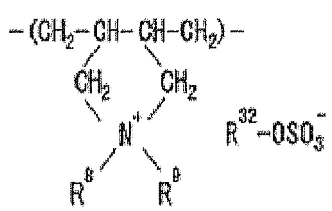

(Vb)

wherein $R^{32}$ represents a hydrocarbon group having 6 to 22 carbon atoms, $R^8$ represents a hydrogen atom or a hydrocarbon group having 1 to 8 carbon atoms, and $R^9$ represents a hydrocarbon group having 1 to 8 carbon atoms; and

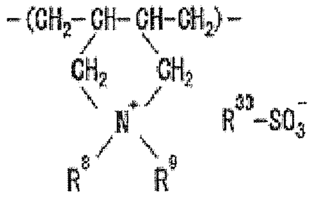 (Vc)

wherein $R^{33}$ represents a hydrocarbon group having 8 to 22 carbon atoms, $R^8$ represents a hydrogen atom or a hydrocarbon group having 1 to 8 carbon atoms, and $R^9$ represents a hydrocarbon group having 1 to 8 carbon atoms.

## INTERNATIONAL SEARCH REPORT

International application No.
PCT/JP2010/072330

A. CLASSIFICATION OF SUBJECT MATTER
*C08F20/60*(2006.01)i, *C09D4/00*(2006.01)i, *C09D5/24*(2006.01)i

According to International Patent Classification (IPC) or to both national classification and IPC

B. FIELDS SEARCHED

Minimum documentation searched (classification system followed by classification symbols)
C08F20/00-20/70, C09D4/00-5/24

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>A | JP 2004-534893 A (Solutia, Inc.),<br>18 November 2004 (18.11.2004),<br>claims 1 to 117; paragraphs [0060], [0064]<br>& JP 2004-534894 A & US 2003/0100670 A1<br>& US 2003/0055161 A1 & US 2005/0245662 A1<br>& US 2007/0100068 A1 & US 2007/0100069 A1<br>& WO 2003/006517 A1 & WO 2003/006518 A1 | 1-3,5,6,10,<br>11<br>4,7-9 |
| X<br><br>A | JP 2001-240622 A (Rohm and Haas Co.),<br>04 September 2001 (04.09.2001),<br>claims 1 to 11; paragraph [0047]<br>& JP 2001-240621 A & US 6541590 B1<br>& US 2003/0171516 A1 & US 2003/0171517 A1<br>& US 6956082 B1 & EP 1108758 A2<br>& EP 1108759 A2 | 1-3,5,6,10,<br>11<br>4,7-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 March, 2011 (08.03.11) | 22 March, 2011 (22.03.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2010/072330

C (Continuation). DOCUMENTS CONSIDERED TO BE RELEVANT

| Category* | Citation of document, with indication, where appropriate, of the relevant passages | Relevant to claim No. |
|---|---|---|
| X<br><br>A | JP 2001-509195 A (Stepan Co.),<br>10 July 2001 (10.07.2001),<br>claims 1 to 129; page 94, example 11<br>& US 6242526 B1 & US 2002/0040092 A1<br>& US 2004/0092632 A1 & WO 1998/032773 A1<br>& WO 2000/006612 A1 | 1-3,5,6,10,<br>11<br>4,7-9 |
| A | JP 2007-191684 A (Kao Corp.),<br>02 August 2007 (02.08.2007),<br>claims 1 to 6<br>(Family: none) | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007191684 A
- JP 2004123924 A
- JP 11060855 A
- JP 11060856 A
- JP 2009263627 A
- JP 2009287010 A


### Non-patent literature cited in the description


- POLYMER HANDBOOK. John Wiley and Sons, Inc, 1989
- POLYMER HANDBOOK. John Wiley and Sons, 1989